# EUROPÄISCHE PATENTSCHRIFT

(11) **EP 2 236 441 B1**
(45) Veröffentlichungstag und Bekanntmachung des Hinweises auf die Patenterteilung: **07.06.2017**
(21) Anmeldenummer: 10158820.0
(22) Anmeldetag: 31.03.2010
(51) Int. Cl.: B65G 1/137

(54) **Anlage und Verfahren zur Kommissionierung von Waren**
Method and device for commissioning goods
Installation et procédé de commissionnement de marchandises

(30) Priorität: 01.04.2009 DE 102009002110; 11.03.2010 DE 102010015935
(43) Veröffentlichungstag der Anmeldung: 06.10.2010
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- EP-A1- 1 462 393
- EP-A2- 0 396 960
- DE-A1- 3 010 637
- DE-A1- 3 524 344
- FR-A1- 2 438 608
- US-A1- 2005 049 745

## Beschreibung

Die vorliegende Erfindung betrifft eine Kommissionieranlage, ein Verfahren zur Kommissionierung von Waren, sowie ein entsprechendes System.

### STAND DER TECHNIK

Im Einzelhandel ist es üblich, Waren in großen Mengen einzukaufen, die in einem Zentrallager angeliefert werden. Von diesem Zentrallager werden die Waren dann auf die einzelnen Filialen bzw. Einzelhandelsgeschäfte verteilt. Hierzu müssen die Waren aus großen Versand- bzw. Verpackungseinheiten mit identischen Waren, in denen die Waren vom Hersteller zum Zentrallager transportiert werden, in kleinere und/oder mit unterschiedlichen Waren zusammen gestellte Versand- oder Verpackungseinheiten umgepackt werden, in denen sie zu den Einzelhandelsgeschäften bzw. Filialen transportiert werden. Die Versand- bzw. Verpackungseinheiten mit identischen Waren, die an das Zentrallager geliefert werden, werden nachfolgend somit als Eingangseinheiten bezeichnet, während die gemischt zusammengestellten Waren, die das Zentrallager in Richtung der Einzelhandelsgeschäfte verlassen, werden als Ausgangseinheiten bezeichnet. Der oben beschriebene Vorgang des Umpackens und Zusammenstellens von Waren, der allgemein als Kommissionierung bezeichnet wird, beinhaltet somit das Entpacken einer sortenreinen Eingangseinheit und das Zusammenstellen von unterschiedlichen Waren in einer Ausgangseinheit. Die nachfolgende Beschreibung betrifft somit ganz allgemein jegliche Vorgänge, bei denen kommissionierähnliche Handlungen vorgenommen werden müssen.

Am Beispiel von Mehrweggetränken lässt sich der Vorgang der Kommissionierung der Waren einfach beschreiben. Eine Brauerei liefert beispielsweise als kleinste Versand- bzw. Verpackungseinheiten ihre unterschiedlichen Getränke sortenrein auf EU-Standardpaletten als Eingangseinheit an. Eine derartige Eingangseinheit ist jedoch für die Anlieferung zu den Einzelhandelsgeschäften zu groß, da die Einzelhandelsgeschäfte bzw. Filialen weder einen ausreichenden Lagerplatz für entsprechend große Mengen an einer Getränkesorte, noch einen ausreichend großen Umsatz an den entsprechenden Getränken haben, so dass sich die Lagerung großer Mengen unterschiedlicher Getränkesorten rentiert. So beschränkt sich beispielsweise der Vorrat an einer Sorte eines Mehrweggetränks in Lebensmitteleinzelhandelsläden oft auf einige wenige Getränkekisten dieser Sorte. Entsprechend muss in einem Zentrallager für die Belieferung der Einzelhandelslebensmittelgeschäfte bzw. Filialen mit einer Ausgangseinheit, z.B. in Form einer EU-Standardpalette, eine Zusammenstellung verschiedener Getränkesorten auf der EU-Standardpalette erfolgen. Hierzu wird bisher so vorgegangen, dass manuell die Palette umgestapelt werden. So werden die im Zentrallager vorhandenen sortenreinen Palettenstapel aufgelöst und individuelle Palettenstapel für die einzelnen Geschäfte bzw. Filialen je nach deren Anforderungen zusammengestellt. Aufgrund des großen Gewichts der Getränkekisten ist dies eine schwere körperliche Arbeit, die zudern einen hohen personellen und organisatorischen Aufwand verursacht.

Eine automatisierte Kommissionierung von Mehrweggetränkekisten ist bislang daran gescheitert, dass Mehrweggetränkekisten schwer identifizierbar sind. Die schwere Identifiziefbarkeit ergibt sich dadurch, dass die Unterscheidungsmerkmale meist lediglich nur auf den Getränkehersteller bezogen sind, jedoch nicht auf die unterschiedlichen Getränkesorten, die dieser Getränkehersteller in identischen Getränkekisten anbietet. So ist auf den Mehrweggetränkekisten zwar meist der Name des Getränkeherstellers angegeben und die Mehrweggetränkekisten sind in einer typischen Farbe des Herstellers gehalten, jedoch sind die Getränkekisten hinsichtlich der enthaltenen Getränkesorte ohne Information, da die Mehrweggetränkekisten für unterschiedliche Getränkesorten Verwendung finden sollen. Aufgrund der vielfachen Absatzwege und des Austausches der Mehrweggetränkekisten mit vielen unterschiedlichen Marktteilnehmern ist auch die Anbringung einer eindeutig identifizierbaren Kennzeichnung nur schwer möglich, da sichergestellt werden muss, dass bei mehreren Umläufen der Getränkekiste mit verschiedenen Getränkesorten immer nur eine einzige zutreffende Identifizierung vorhanden ist. Hierbei ergibt sich das Problem, dass entweder nicht alle früher angebrachten Identifizierungsmerkmale 100%ig entfernt werden oder der Aufwand für den 100%igen Austausch der Identifizierungsmerkmale sehr hoch ist.

Das Dokument FR 2 438 608 A1 offenbart eine Anlage gemäß dem Oberbegriff der Ansprüche 1 und 7, sowie ein Verfahren zum Entladen von Paletten mit gleichen Einzelprodukten und zum anschließenden Zusammenstellen von Paletten mit verschie denen Einzelprodukten. Die Paletten werden zuerst mittels einer Entladevorrichtung entladen, wobei gleiche Einzelwaren jeweils auf einem eigenen Lagerplatz gelagert werden. Verschiedene Einzelprodukte von verschiedenen Lagerplätzen werden dann mittels einer Repalettiervorrichtung zu einer Gemischtwarenpalette zusammengestellt.

### OFFENBARUNG DER ERFINDUNG

### AUFGABE DER ERFINDUNG

Es ist deshalb Aufgabe der vorliegenden Erfindung eine Anlagen bzw. entsprechende Vorrichtungen sowie ein Verfahren zur automatischen Kommissionierung von Waren bereitzustellen, wobei die Waren von außen schwer unterscheidbar und identifizierbar sind. Eine entsprechende Anlage soll einfach aufgebaut und bei hohem fehlerfreiem Mengendurchsatz leicht betreibbar sein.

### TECHNISCHE LÖSUNG

Diese Aufgabe wird gelöst mit einer Anlage nach Ansprüchen 1 oder 7, mit einem Verfahren nach Ansprüchen 9 oder 11, sowie mit einem System nach Anspruch 13. Vorteilhafte Ausgestaltungen sind Gegenstand der abhängigen Ansprüche.

Diese Aufgabe wird nach einem ersten Aspekt der Erfindung, für den unabhängig und in Kombination mit anderen Aspekten der Erfindung Schutz begehrt wird, durch eine Anlage bzw. ein Verfahren gelöst, bei dem die Waren automatisiert von Eingangseinheiten, z.B. Palettenstapeln, in ein Einzelwarenlager, auch automatisches Kleinteilelager (AKL) genannt, einsortiert werden, wobei für jeden Lagerplatz des Einzelwarenlagers bekannt ist, welche Ware (Einzelware) dort gelagert ist. Das Einzelwarenlager, welches sämtliche unterschiedlichen Einzelwaren, die von dem System behandelt werden müssen, umfasst, dient zur Zusammenstellung der kommissionierten, also gemischt zusammengestellten Ausgangseinheiten, also z.B. wiederum Palettenstapel. Neben üblichen Palettenstapel können auch Doppelstockpaletten, Rollcontainer, oder andere Formen von Ausgangseinheiten aus unterschiedlicher Waren zusammengestellt werden oder als Eingangseinheiten verarbeitet werden.

Unter Einzelwarenlager wird bei der vorliegenden Anmeldung ein Lager verstanden, bei dem in entsprechenden Regalfächern oder Lagerplätzen Waren gelagert sind, wie sie einzeln an einen Adressaten, wie beispielsweise ein Einzelhandelsgeschäft, ausgeliefert werden. Entsprechend kann es sich hierbei um einzelne Gegenstände oder entsprechende Verpackungseinheiten handeln, bei denen mehrere Gegenstände zusammen verpackt sind. Eine derartige Verpackungseinheit, die auch als Verkaufseinheit bezeichnet werden kann, soll bei der vorliegenden Anmeldung ebenfalls als Einzelware bezeichnet werden, da sie in dieser kleinsten Verpackungseinheit an den Adressaten ausgeliefert wird.

Das Einzelwarenlager kann als automatisches Kleinteilelager (AKL) ausgebildet sein, wobei die Einzelwaren dort in entsprechenden Lagerplätzen eingelagert sind. Beim automatischen Kleinteilelager erfolgt sowohl die Bestückung der Lagerplätze als auch die Herausnahme der Einzelwaren aus den Lagerplätzen voll automatisiert. Beispielsweise werden hierfür, wenn das automatische Kleinteilelager mit entsprechenden Regalen, beispielsweise in Form eines Hochregallagers ausgebildet ist, entsprechende Regalfahrzeuge eingesetzt, die entlang der Regale des Kleinteilelagers verfahrbar sind. Diese Regalfahrzeuge, die auch als Regalbediengeräte oder Picking-mini-loads (PML) bezeichnet werden können, können die Einzelwaren in das AKL oder zumindest ein Teil davon einlagern und von dort wieder entnehmen. Im Folgenden wird allgemein von Lagerbediengeräten gesprochen, da die Erfindung und die entsprechenden Einzelwarenlager nicht auf Regallager beschränkt ist, sondern jegliche Lagerformen einsetzbar sind.

Wie bereits oben erwähnt, wird unter Einzelware ein einzelner Gegenstand, wie beispielsweise ein Karton oder auch eine Getränkekiste verstanden. Beim Beispiel der Getränkekiste sind jedoch mehrere Getränkebehälter, wie beispielsweise Flaschen in der Getränkekiste aufgenommen, so dass klar wird, dass die Verpackungs- oder Verkaufseinheit in Form einer Getränkekiste für den vorliegenden Fall als Einzelware zu verstehen ist. Insbesondere lassen sich also unter dem Begriff Einzelware alle Gegenstände verstehen, die als eine einzelne handhabbare Versand-, Verpackungs- und Verkaufseinheit an den Adressaten, also beispielsweise ein Einzelhandelsgeschäft ausgeliefert wird.

Die Einzelwaren sind bei der Anlieferung zu einem Zentrallager zu größeren Gebilden zusammengefasst, zum Beispiel auf einer EU-Standardpalette, auf einem Rollcontainer oder auf einem sonstigen geeigneten Ladungsträger. Ein derartiges Gebilde von zusammengefassten Einzelwaren, die angeliefert werden und von daher sortenreine Einzelwaren enthalten soll, wie oben definiert, als Eingangseinheit bezeichnet werden, während eine Zusammenstellung von kommissionierten Waren, also ein Gebilde mit unterschiedlichen Einzelwaren als Ausgangseinheit bezeichnet werden soll.

Neben der Lagerung auf unterschiedlichen Ladungsträgern, wie beispielsweise Paletten, Rollcontainer usw., können die Eingangseinheit und die Ausgangseinheit in unterschiedlichster Weise zu einem Gebilde zusammengefasst werden, beispielsweise über entsprechende Schrumpffolien, Wickelfolien und dergleichen.

Bei der erfindungsgemäßen Anlage bzw. dem erfindungsgemäßen Verfahren wird eine Fördertechnik eingesetzt, um die Einzelwaren in der Anlage zu bewegen, beispielsweise eine erste Förderstrecke von einer Depalettier- und/oder Entstapelungsstation (Vereinzelungsstation), bei der die Einzelwaren von der Eingangseinheit entnommen und/oder vereinzelt werden, zum Einzelwarenlager und eine zweite Förderstrecke vom Einzelwarenlager zur Stapel- und/oder Verpackungsstation (Palettierstation), bei der die Ausgangseinheit aus den verschiedenen Einzelwaren zusammenstellt wird. Die Fördertechnik kann Elemente einer stetigen Fördertechnik und einer unstetigen Fördertechnik umfassen. Unter stetiger Fördertechnik wird eine Bewegung der Einzelwaren in einem kontinuierlichen Prozess, beispielsweise über ein umlaufendes Transportband, einer Rollenbahn oder dergleichen verstanden, während unstetige Fördertechnikelemente eine diskontinuierliche, sequenzielle Bewegung mit diskreten Schritten ermöglichen, wie beispielsweise Querverschiebewagen. Beide Arten der Fördertechnik können bei der vorliegenden Erfindung eingesetzt werden, wobei nach einem Aspekt der Erfindung eine erste Förderstrecke von einer Vereinzelungsstation zum Einzelwarenlager und/oder eine zweite Förderstrecke von dem Einzelwarenlager zur Stapel- und/oder Verpackungsstation eine Zwangsführung der Waren aufweist, was bedeutet, dass ein einziger Transportweg vorgegeben ist, den die Waren zwangsweise nehmen müssen, ohne dass Entscheidungen über die Auswahl der Wegstrecke getroffen werden müssen und ohne dass es zu Überholungen oder dergleichen kommt. Die Förderstrecken können jedoch in Teilstrecken unterteilt sein.

Die mittels der Fördertechnik bewegten Einzelwaren können insbesondere alternativ zur Zwangsteilung oder zusätzlich bei der Bewegung überwacht werden, so dass festgestellt werden kann, welche Waren wohin bewegt werden. Dies wird auch als Zielverfolgung bezeichnet. Hierbei unterscheidet man grundsätzlich zumindest zwischen einer indirekten Zielverfolgung und einer direkten Zielverfolgung. Bei der direkten Zielverfolgung, die bei der vorliegenden Erfindung vermieden werden kann, werden die Einzelwaren, die bewegt werden, direkt von entsprechenden Erkennungsstationen identifiziert, so dass entlang der Wegstrecke bzw. der Förderstrecke entsprechende Identifizierungsstationen angeordnet sind, um eine direkte und unmittelbare Identifizierung der geförderten Einzelwaren zu ermöglichen. Dies kann beispielsweise durch Barcodes (Stricherkennung) oder RFID (Radio frequency identifcation) - Etiketten, durch Bild- oder Mustererkennung von Bildaufnahmen der Waren oder Messung anderer Eigenschaften der Waren, wie z.B. des Gewichts, erfolgen. Dazu ist es notwendig, dass die Erkennungsstationen durch physikalische Messungen eine Information von den zu erkennenden bzw. direkt zu verfolgenden Waren erhalten und somit Information, z.B. über die Art der Ware, Produktbezeichnung, Größe etc., übermittelt bzw. erfasst wird. Die direkte Zielverfolgung mit entsprechend aufwändiger Erkennung und Identifizierung der bewegten Verfahren und der damit verbundenen Fehleranfälligkeit ist auf Grund der vorliegenden Erfindung nicht erforderlich. Stattdessen genügt bei der vorliegenden Erfindung eine indirekte Zielverfolgung, insbesondere rein auf Basis der Informationstechnik und/oder nur eine Zählkontrolle, wenn der Förderweg eine Zwangsführung der Waren auf einem einzigen Pfad vorsieht.

Bei der indirekten Zielverfolgung ist gegenüber der direkten Zielverfolgung keine direkte Erkennung der Einzelwaren durch Identifikationsstationen oder -Systeme erforderlich, sondern die Information über die Identität einer bestimmten Ware wird dem System an einem bestimmten Startpunkt übergeben, also z. B. bei der Anlieferung der Eingangseinheit, und das System erhält die Information, dass die Ware an eine bestimmte Zieladresse geschickt wird. Es wird dann lediglich festgestellt, dass irgendein Gegenstand die entsprechende Förderstrecke passiert hat bzw. das Ziel erreicht hat, so dass es sich dabei um die entsprechende abgeschickte Ware handeln muss. Somit ist keine direkte Identifizierung durch Erkennen eines bestimmten Codes oder einer direkten Informationsübermittlung zwischen einer Erkennungsstation und der Ware erforderlich, was bei den schlecht identifizierbaren Waren, die Gegenstand der vorliegenden Erfindung sind, auch möglicher Weise unmöglich ist. Lediglich Sensoren, die das Passieren irgendeines Gegenstandes bzw. die Ankunft irgendeines Gegenstandes anzeigen, wie beispielsweise Lichtschranken, Anschlagelemente oder dergleichen sind hierzu erforderlich.

Die Förderstrecken können sehr kurz gehalten werden, insbesondere in einem Längenbereich von kleiner oder gleich 15 m, insbesondere 10 m.

Durch die Verwendung des Einzelwarenlagers können direkt aus dem Einzelwarenlager mit definierten Lagerplätzen für die unterschiedlichen Waren die für die Zusammenstellung einer kommissionierten Ausgangseinheit erforderlichen Waren bereitgestellt und zu der Ausgangseinheit, also beispielsweise zu einem Palettenstapel, zusammengeführt werden. Durch die direkte, unmittelbare Einlagerung der sortenrein angelieferten Waren in das Einzelwarenlager und die direkte und unmittelbare Zusammenstellung der gemischten bzw. kommissionierten Ausgangseinheit aus dem Einzelwarenlager heraus ist weder beim Einlagern in das Einzelwarenlager noch beim Auslagern aus dem Einzelwarenlager, also beim gesamten Kommissioniervorgang eine direkte Zielverfolgung der Waren mit einem Erfassungs- oder Identifizierungssystem für die Art der Ware erforderlich. Im Falle einer Kommissionierung von Mehrweggetränkekisten, beispielsweise auf eine EU-Palette oder einen Rollcontainer, werden sämtliche benötigten Getränkesorten gezielt aus den bekannten Lagerplätzen aus dem Einzelwarenlager angefordert und ohne Verzweigungspunkte oder Zusammenführungen im Transportweg direkt vom Einzelwarenlager zu einer Stapel- und/oder Verpackungsstation transportiert, die die Einzelwaren zur Bildung des Palettenstapels für die Ausgangseinheit stapelt (Stapelstation) und/oder palettiert, d.h. auf einer Palette anordnet (Palettierstation und im weiteren Sinne Verpackungsstation) und/oder in sonstiger Weise verpackt (Verpackungsstation), so dass auf aufwändige Erfassungssysteme für die Art der Ware und eine entsprechende direkte Zielverfolgung verzichtet werden kann. Die Stapel- und/oder Verpackungsstation kann durch getrennte Vorrichtungen oder durch eine einzige integrierte Vorrichtung verwirklicht werden, wobei der Begriff der Verpackungsstation sehr allgemein verwendet wird, so dass darunter auch eine reine Palettierstation verstanden wird, unabhängig davon, ob weitere Verpackungen, wie z.B. Wickel- oder Schrumpffolien und entsprechende integrierte oder separate Vorrichtungen hierfür vorgesehen sind.

Insbesondere zeichnet sich die Erfindung nach einem weiteren Aspekt, für den selbständig und in Kombination mit anderen Aspekten der vorliegenden Erfindung Schutz begehrt wird, dadurch aus, dass die sortenreinen Eingangseinheiten voll automatisch in ein Einzelwarenlager einsortiert werden, bei dem bekannt ist, an welchen Lagerplätzen welche Einzelwaren gelagert sind. Aus diesem Einzelwarenlager werden die verschiedenen Einzelwaren, die zur Zusammenstellung einer gemischten Ausgangseinheit, z. B. in Form einer EU-Standardpalette, zusammengestellt werden, ebenfalls voll automatisch aus den bekannten Lagerplätzen ausgelagert und direkt zu der Ausgangseinheit zusammengestellt, so dass keine Identifizierung der einzelnen Waren auf dem Weg von ihrem Lagerplatz aus dem Einzelwarenlager zur Verpackungs- bzw. Stapelstation zur Bildung einer Ausgangseinheit erforderlich ist. Der Transportweg von der Depalettierstation der sortenrein angelieferten Waren in das Einzelwarenlager sowie aus dem Lagerplatz im Einzelwarenlager zur Palettierstation der kommissionierten Waren weist keine Transportpfadverzweigungen oder Zusammenführungen auf, bei denen die Nachverfolgung und die Identifizierung der Waren in Form einer direkten Zielverfolgung aufwändig erfolgen müsste. Stattdessen ist der Transportpfad sowohl von der Depalettierstation der sortenreinen Waren in das Einzelwarenlager als auch vom Einzelwarenlager zur Palettierstation der kommissionierten Waren kompakt und kurz strukturiert, so dass entsprechend keine direkte Zielverfolgung der Waren durch aufwändige Identifizierungssysteme über optische Systeme oder Gewichtsermittlung oder dgl. notwendig ist.

Entsprechend ist nach einem weiteren Aspekt der Erfindung, für den selbständig und in Kombination mit anderen Aspekten der Erfindung Schutz begehrt wird, die entsprechende Kommissionieranlage so aufgebaut, dass das Einzelwarenlager sämtliche oder zumindest einen überwiegenden Anteil der von der Anlage bzw. dem System zu handhabenden Waren vorrätig hat, so dass im einfachsten Fall mit einem einzigen Regalbediengerät oder Lagerbediengerät alle Waren aus dem Einzelwarenlager ausgelagert werden können. Auf diese Weise kann eine kommissionierte Ausgangseinheit alleine basierend auf der Information über den Lagerplatz der verschiedenen Waren zusammengestellt werden, da vorzugsweise ein einziges Lagerbediengerät die Waren aus den bekannten Lagerplätzen auslagert und unmittelbar zur Ausgangseinheit zusammenstellt oder dazu zur Verfügung stellt, ohne dass die verschiedenen Waren aus unterschiedlichen Lagern mit unterschiedlichen Lagerbediengeräten an irgendeiner Stelle zusammengeführt werden müssen. Kerngedanke hierbei ist, dass keine Identifizierung der Waren während des Transports zwischen dem Lagerplatz und der Stapel- und/oder Verpackungsstation erforderlich ist, wenn sämtliche Waren zur Zusammenstellung einer Ausgangseinheit aus einem einzigen Einzelwarenlager entnommen und an einem gemeinsamen Übergabepunkt für die Stapel- und/oder Verpackungsstation übergeben werden. Entsprechend kann am Übergabepunkt lediglich nur noch die Anzahl der Waren für die Ausgangseinheit überprüft werden, aber nicht mehr die Identität der einzelnen Waren.

Es ist prinzipiell auch denkbar, dass das Einzelwarenlager mehrere Lagerbediengeräte und/oder Einzelwarenlagerabschnitte aufweist, die das gesamte oder überwiegend zu behandelnde Warensortiment abdecken, also die Möglichkeit bieten, sämtliche Waren für eine Ausgangseinheit auszulagern. In diesem Fall können die zusammenwirkenden Lagerbediengeräte und Regalabschnitte so auf einander abgestimmte werden, dass sie zusammen einen Auftrag für eine Ausgangseinheit bearbeiten und die entsprechenden Waren an einem klar definierten Übergabepunkt für die Stapel- und/oder Verpackungsstation zusammenstellen. Für wenige kombinierte Warenlagerabschnitte und/oder Lagerbediengeräte ist die alleinige informationstechnische Überwachung der zusammenzustellenden Waren, d. h. die Sicherstellung der Kenntnis, wo sich die einzelnen verschiedenen Waren gerade befinden, unter Ausschluss aufwändiger Identifizierungs- oder Erkennungsmaßnahmen noch handhabbar. Allerdings ist es bevorzugt, dass möglichst nur ein, zwei oder drei Lagerbediengeräte zur Auslagerung der Waren aus dem Einzelwarenlager mit dem vollständigen Sortiment der zu handhabenden Waren, z. B. in Form zweier gegenüberliegenden Regale mit einer einzigen Regalbediengerätgasse dazwischen, vorgesehen ist, so dass auf dem oder den zugeordneten Transportpfaden aus dem Einzelwarenlager zu der oder den Stationen zur Zusammenstellung der kommissionierten Ausgangseinheit klar ist, welche Waren gerade transportiert werden, ohne irgendwelche Identifizierungen vornehmen zu müssen.

Allerdings ist es möglich größere Anlagen modulweise aufzubauen, die mehrere Module mit jeweils einem kompletten Einzelwarenlager und einer oder mehrerer Stationen zum Einlagern (Depalettierstation der sortenrein angelieferten Waren mit Transportpfad zum Einzelwarenlager) und Auslagern (Transportpfad vom Einzelwarenlager zur Palettierstation der kommisionierten Waren) aufweist.

Die gleichen Lagerbediengeräte, die zur Auslagerung der Waren aus dem Einzelwarenlager dienen, können auch zur Einlagerung der Waren ins Einzelwarenlager genutzt werden, wobei zur Erhöhung der Kapazität auch zusätzliche Lagerbediengeräte zur Einlagerung der Waren in das Einzelwarenlager vorgesehen werden können.

Aus der obigen Beschreibung ergibt sich, dass nach einem weiteren Aspekt der vorliegenden Erfindung, für den ebenfalls, wie für die anderen Aspekte, selbstständig und in Kombination mit den anderen Aspekten Schutz begehrt wird, eine reine informationstechnische Überwachung der Waren von der Auslagerung der Waren aus dem Einzelwarenlager bis zur Zusammenstellung der gemischten bzw. kommissionierten Ausgangseinheit erfolgt. Dies bedeutet, dass alleine mit der Kenntnis, welche Ware wo im Einzelwarenlager gelagert ist, und der entsprechenden Aktion zum Auslagern der gewünschten Waren und Weiterleitung zur Stapel- und/oder Verpackungsstation zur Bildung der gemischten Ausgangseinheit sichergestellt wird, dass die gewünschten Waren wie vorgegeben in der gemischten bzw. kommissionierten Ausgangseinheit vorliegen. Da auf die Zusammenführung und/oder Teilung von Warenströmen in der Transportkette bei der Einlagerung der Waren in das Einzelwarenlager sowie bei der Auslagerung der Waren aus dem Einzelwarenlager bis zur Zusammenführung in der kommissionierten Ausgangseinheit verzichtet wird, kann auf Erfassungs- bzw. Identifizierungsvorrichtungen für die verschiedenen Waren auf dem Transportweg verzichtet werden. Lediglich einfach gestaltete Überwachungseinheiten, wie Zähleinheiten, beispielsweise Lichtschranken und dergleichen, die lediglich feststellen, ob sich eine Ware auf dem Transportpfad befindet bzw. wo sich die Ware befindet, können vorgesehen sein, ohne dass diese Überwachungseinheiten die Identität der Waren feststellen müssten. Dadurch ist ein erheblich vereinfachter Aufbau der Kommissioniervorrichtung bzw. Anlage möglich.

Unter reiner informationstechnischer Überwachung wird somit verstanden, dass alleine die zu Beginn in der Kommissionieranlage oder dem Kommissioniersystem hinterlegte Information über den Lagerplatz einer Einzelware im Einzelwarenlager genutzt wird, um die Einzelware bei Bedarf in eine Ausgangseinheit einzufügen, ohne zwischenzeitlich eine Identifizierung oder Erkennung der Einzelware vornehmen zu müssen. Durch die einfach und kurz gestalteten Transportpfade ist eine einfache indirekte Zielverfolgung möglich, die lediglich Mittel zum Erfassen der Einzelwaren ohne Erkennung oder Identifizierung umfasst, wie z.B. Zähler, Anwesenheitssensoren, Lichtschranken oder dergleichen.

Nach einem weiteren Aspekt der vorliegenden Erfindung, für den unabhängig und in Kombination mit den anderen Aspekten Schutz begehrt wird, kann zur Erhöhung der Effizienz des Verfahrens bzw. der Vorrichtung zusätzlich ein sog. Turmlager vorgesehen werden. Da die sortenrein angelieferten Eingangseinheiten, z. B. in Form von sortenreinen Warenstapeln auf EU-Standardpaletten, vorsehen, dass mehrere Einzelwaren übereinander und nebeneinander gestapelt sind, und in der kommissionierten Ausgangseinheit wiederum entsprechende Einzelwaren in ähnlicher Form übereinander und nebeneinander gestapelt werden, können Untereinheiten der Einzelwaren, also beispielsweise eine Reihe nebeneinander liegender Waren und/oder ein Turm übereinander gestapelter Waren als Untereinheit behandelt werden, ohne dass eine Auflösung der Untereinheit notwendig ist, da diese Untereinheit in Form eines Turms und/oder einer Reihe direkt in eine kommissionierte Ausgangseinheit eingelagert werden kann. Entsprechend sieht die Erfindung nach einem Aspekt vor, zusätzlich zu einem Einzelwarenlager, in dem die Waren entsprechend einzeln bzw. in ihrer kleinsten Einzelverpackungseinheit (siehe oben) separat voneinander gelagert sind, ein sog. Turmlager bzw. Untereinheitenlager vorzusehen, welches entsprechende Untereinheiten lagern kann, so dass diese Untereinheiten in Form von Türmen oder Reihen direkt aus dem Untereinheitenlager bzw. Turmlager zur Bildung einer kommissionierten Ausgangseinheit transportiert werden können, ohne dass eine Auflösung bzw. Zergliederung der Untereinheit und Einlagerung der Waren in das Einzelwarenlager notwendig wäre. Die Untereinheiten bzw. das Untereinheitenlager ermöglichen somit die Lagerung und/oder den Transport von mehreren Einzelwaren in einer Einheit. Damit lässt sich die Effektivität einer entsprechenden Kommissionieranlage bzw. eines entsprechenden Systems deutlich verbessern. Entsprechend erfolgt der Materialfluss in einem derartigen System nicht wie bei der vorher beschriebenen Variante von dem Palettenlager mit den sortenrein angelieferten Eingangseinheiten direkt in das Einzelwarenlager, sondern von dem Palettenlager in das Turmlager und von dem Turmlager zumindest teilweise in das Einzelwarenlager und/oder zumindest teilweise direkt zu einer Stapel- oder Verpackungsstation zur Bildung einer kommissionierten Ausgangseinheit, also beispielsweise einer Palettierstation für die Palettierung der gemischten Warenpaletten.

Unter Stapel- oder Verpackungsstation wird also allgemein eine Vorrichtung verstanden, bei der mehrere Einzelwaren zu einer Untereinheit aus mehreren Einzelwaren und/oder mehrere Einzelwaren und/oder Untereinheiten aus Einzelwaren zu einer Ausgangseinheit zusammengestellt werden, d.h. z.B. gestapelt, nebeneinander auf einen Transportträger geschlichtet, zusammen verpackt und/oder auf eine Palette palettiert werden. Entsprechend kann die Stapel- und/oder Verpackungsstation durch separate oder kombinierte Stapeleinrichtungen, Palettierer, weitere Verpackungseinrichtungen, wie Vorrichtungen zur Folienumwicklung oder dergleichen gebildet sein.

Obwohl das Einzelwarenlager und das Turmlager bzw. das Untereinheitenlager örtlich getrennt voneinander vorgesehen werden können, ist es auch möglich die unterschiedlichen Lagerarten gemischt vorzusehen, da die Lagerorte entsprechend informationstechnisch gekennzeichnet werden können, d.h. dem System ist bekannt, wo welche Waren in welcher Form eingelagert sind.

Auch bei der Zuführung von sortenreinen Untereinheiten mit mehreren Einzelwaren in Form von Warentürmen oder Warenreihen zur Stapel- und/oder Verpackungsstation zur Bildung von gemischten Ausgangseinheiten erfolg der Weg möglichst unmittelbar und direkt, und zwar weitgehend ohne zusätzliche Verzweigungen, Abzweigungen, Zusammenführungen und dergleichen, so dass wiederum weitgehend rein informationstechnisch, insbesondere ohne Erkennungs- oder Identifizierungssysteme überwacht werden kann, dass die richtigen Waren in der kommissionierten Ausgangseinheit zusammengestellt werden. Dadurch kann auch hier auf aufwändige Systeme zur direkten Nachverfolgung bzw. Identifizierungs- und Erfassungseinrichtungen verzichtet werden.

Außerdem können die Lagerbediengeräte bzw. Regalbediengeräte so ausgebildet sein, dass sie entsprechende Untereinheiten bzw. mehrere Einzelwaren gleichzeitig transportieren können, so dass die Effizienz und Einsatzvariabilität verbessert ist.

Die erfindungsgemäßen Systeme bzw. die zugrunde liegenden Verfahren und die entsprechenden Vorrichtungen bzw. Anlagen eignen sich in besonderer Weise für die Kommissionierung von Mehrweggetränkekisten, bei denen nur schwer und aufwändig identifiziert werden kann, welche Getränkesorte sich in den entsprechenden Getränkekisten befindet. Neben den Mehrweggetränkekisten können jedoch auch alle anderen Waren mit oder ohne Verpackungen, die nicht einfach identifizierbar sind, nach dem entsprechenden System behandelt werden. Insbesondere können auch frische Produkte, wie Obst, Gemüse, Fleisch oder Fisch insbesondere in entsprechenden Behältern kommissioniert werden, wobei die Behälter unterschiedliche Dimensionen aufweisen können.

Durch die vollautomatische Ein- und Auslagerung der Waren in das Einzelwarenlager und/oder Untereinheitenlager, sowie die Kommissionierung entsprechender Ausgangseinheiten, eignet sich das Verfahren insbesondere auch für Waren, die bei bestimmten Temperaturen gehandhabt werden müssen, wie beispielsweise Tiefkühlkost oder dergleichen, da das vollautomatische Verfahren ganz ohne Personaleinsatz auskommt und entsprechend bei niedrigen Temperaturen betrieben werden kann. Außerdem können auch schwere Waren mit hohem Durchsatz bearbeitet werden, da dies nicht durch die Belastungsfähigkeit einer menschlichen Arbeitskraft limitiert wird.

Durch den modularen Aufbau können beliebige Anforderungen an den Mengendurchsatz von Waren in einfacher Weise erfüllt werden, da mehrere Module, die einzeln jeweils eine komplette Verwirklichung der Erfindung darstellen, miteinander kombiniert werden können.

Durch die sehr kurzen Fördertechnikstrecken von der Depalettierstation (Vereinzelungsstation) der sortenreinen Waren (Eingangseinheit) zum Einzelwarenlager und/oder Untereinheitenlager sowie vom Einzelwarenlager und/oder Untereinheitenlager zur Palettierstation (Stapel- und/oder Verpackungsstation) für die kommissionierten Waren (Ausgangseinheit) wird nicht nur vermieden, dass aufwändige Erkennungs- oder Identifizierungssysteme eingesetzt werden müssen, sondern die Fehleranfälligkeit von Verzweigungs- und Zusammenführungs- bzw. Kreuzungsstellen, auf die verzichtet werden kann, wird ebenfalls beseitigt. Darüber hinaus ist der Platzbedarf niedrig, da das Einzelwarenlager als Hochregallager ausgeführt sein kann. Durch das kompakte Design kann die gesamte Anlage auch bei bestimmten Temperaturen, wie z.B. für Tiefkühlkost, betrieben werden.

Durch die Überwachung aller Bewegungen der Lagerbediengeräte, sowohl auf Seiten der Steuerungstechnik, als auch auf Seiten der Informationstechnik ist eine zu 100 % fehlerfreie Materialflussverfolgung im gesamten System möglich, ohne irgendwelche aufwändigen Identifizierungssysteme einsetzen zu müssen. Insbesondere kann auch auf die Kennzeichnung, beispielsweise physikalische Kennzeichnung, der einzelnen Behälter oder Waren mit Barcode oder ähnlichem verzichtet werden. Dies hat nicht nur den Vorteil, dass die Kennzeichnung entfällt, sondern auch wiederum die Vermeidung von Fehlern zur Folge, die durch beschädigte Kennzeichnungsmittel, wie Barcodes oder RFID (Radiofrequency Identification) Etiketten, denkbar wären. Gemäß den erfindungsgemäßen Systemen erfolgt eine Identifizierung der Waren lediglich einmal zentral bei der Einspeisung eines sortenreinen Warenstapels in das System bei einer entsprechenden Vereinzelungsstation (Depalettierstation). Eine spätere Identifizierung ist nicht mehr notwendig, da das Anlagensystem zu jeder Zeit genau gespeichert hat, wo sich welche Ware befindet und durch das Design der Anlage und der Transportwege auch keine Fehlpositionierung möglich ist.

Durch die kompakte Ausgestaltung der Fördertechnik ist auch ein sehr energieeffizienter Betrieb beispielsweise bei temperatursensiblen Waren, wie Tiefkühlkost oder dergleichen möglich, da nur ein sehr kleiner Bereich entsprechend auf Temperatur gehalten werden muss.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Figuren deutlich. Die Figuren zeigen hierbei in rein schematischer Weise in
- Figur 1: den Vorgang einer Kommissionierung, also der Überführung einer sortenreinen Eingangseinheit in Form eines Palettenstapels in eine gemischte Ausgangseinheit in einer perspektivischen Darstellung;
- Figur 2A: eine Draufsicht auf eine Gesamtanlage gemäß der Erfindung;
- Figur 2B: eine Draufsicht auf eine erste Ebene der Gesamtanlage aus Fig. 2A;
- Figur 2C: eine Draufsicht auf eine zweite Ebene der Gesamtanlage aus Fig. 2A;
- Figur 3: eine Detailansicht der Turmeinlagervorrichtung aus Figur 2;
- Figur 4A: eine Teilansicht des Turmlagers aus den Figuren 2 und 3;
- Figur 4B: eine Teilansicht eines Regalbediengeräts des Turmlagers aus Figur 4A;
- Figur 4C: eine Teilansicht eines Turmlagers aus den Figuren 2 und 3;
- Figur 5: eine Detailansicht einer Kommissioniervorrichtung;
- Figur 6A: eine Ansicht des Einzelwarenlagers und der Kommissioniervorrichtung aus der Figur 2;
- Figur 6B: eine Detailansicht des Einzelwarenlagers mit Regalbediengerät;
- Figur 7: ein Ablauf-Schema für eine weitere erfindungsgemäße Ausführungsform;
- Figur 8: ein Ablauf-Diagramm für eine erfindungsgemäße Ausführungsform;
- Figur 9: eine Draufsicht auf eine weitere Ausführungsform einer erfindungsgemäßen Kommissionieranlage;
- Figur 10: eine Seitenansicht eines Details der Kommissionieranlage aus Figur 9; und in
- Figur 11: ein Ausführungsbeispiel des Betriebsablaufs bei der Kommissionieranlage der Figur 9.

### AUSFÜHRUNGSBEISPIEL

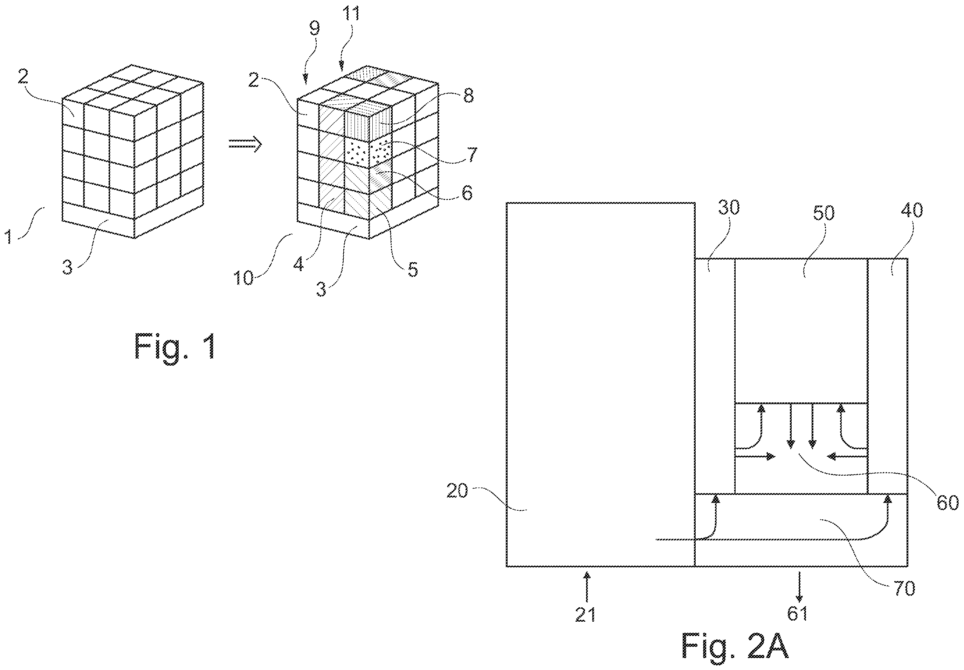

Die Figur 1 zeigt in einer perspektivischen Darstellung zwei Palettenstapel 1 und 10, wobei der Palettenstapel 1 auf einer Palette 3, beispielsweise einer EU-Standardpalette, nur identische Einzelwaren 2 enthält und somit eine Eingangseinheit in ein Zentrallager beispielsweise einer Einzelhandelskette darstellt. Die Einzelware 2, die wiederum kleinere Verpackungseinheiten umfassen kann, ist die kleinste Verpackungseinheit, die entsprechend dem System zur Kommissionierung von Waren in dem Zentrallager behandelt wird.

Obwohl die Einzelhandelsgeschäfte, also die Filialen der Lebensmittelhandelskette oder dergleichen, ebenfalls in größeren Verpackungseinheiten, die unterschiedlich oder identisch zu der Eingangseinheit 1 sein können, beliefert werden (siehe Ausgangseinheit 10 der Figur 1), müssen diese Ausgangseinheiten aus dem Zentrallager mit verschiedenartigen Waren zusammengestellt werden, da der Bedarf an einer bestimmten Art von Ware in den Einzelhandelsgeschäften nicht so groß wie die entsprechende Verpackungseinheit ist und darüber hinaus der Stauraum bzw. Lagerraum nicht ausreichend vorhanden ist. Entsprechend umfasst die kommissionierte Ausgangseinheit 10 verschiedene Waren 2, 4, 5, 6, 7, 8, die wiederum auf einer Palette 3 gestapelt sind. Anstelle einer Palette 3 könnten auch ein Rollcontainer oder andere Transportmittel für Verpackungseinheiten gewählt werden bzw. die Verpackungseinheit könnte ohne zusätzliche Palette oder dergleichen zusammengestellt werden.

In der kommissionierten Ausgangseinheit 10 können beispielsweise so viele gleichartige Waren 2 oder 4 vorgesehen sein, so dass Türme 9, 11 gleichartiger Waren gebildet werden können. Beispielsweise kann der Turm 9 vier übereinander gestapelte Einzelwaren 2 umfassen. Entsprechend ist es nicht erforderlich, bei der Eingangseinheit 1 sämtliche Waren bzw. Einzelverpackungseinheiten 2 voneinander zu trennen, sondern es können Untereinheiten in Form der Türme 9, 11 gebildet werden, die direkt in die kommissionierte Ausgangseinheit 10 überführt werden können. Dadurch lässt sich der Aufwand bzgl. des Vereinzelns (Entstapeln) und Zusammenstellens (Stapeln) erheblich verringern.

Die Figur 2A zeigt eine entsprechende Anlage zur Kommissionierung in einer Draufsicht. Die Anlage umfasst ein sog. Palettenlager 20, in dem die sortenreinen Eingangseinheiten 1 vom Hersteller der Waren, beispielsweise Paletten mit Getränken einer bestimmten Sorte vom Getränkehersteller, z. B einer Brauerei, angeliefert werden. Die Anlieferung ist mit dem Pfeil 21 symbolisiert. Die sortenreinen Eingangseinheiten 1, also die Getränkekistenstapel mit einer Getränkesorte, können in dem Palettenlager 20 zwischengelagert werden. Von dort werden sie in eine Turmlagervorrichtung 70 befördert, wo sie in einer Depalettierstation (erste Vereinzelungsstation) von den Paletten getrennt und weiter in entsprechende Untereinheiten, beispielsweise Türme, getrennt werden. Die Untereinheiten in Form von Türmen 9, 11 werden als sortenreine Untereinheiten in den Turmlagern 30 und 40 mittels eines Regalbediengeräts eingelagert, wobei die Lagerplätze informationstechnisch erfasst und gespeichert werden, so dass bekannt ist, welche Waren an welchen Lagerplätzen des Turmlagers 30, 40 gelagert sind. Die Türme entsprechen einem einzelnen Stapel auf einer Palette und werden als Einheit transportiert und gelagert. Die informationstechnische Überwachung und Steuerung sowie Speicherung der Lagerorte wird durch eine entsprechend softwaretechnisch ausgestatte Datenverarbeitungsanlage übernommen. Von den Turmlagern 30, 40 werden die Untereinheiten (Türme) über die Kommissioniervorrichtung 60 in die Einzelwaren 2 vereinzelt (zweite Vereinzelungsstation) und in ein Einzelwarenlager 50 eingelagert und/oder direkt in eine kommissionierte Ausgangseinheit überführt, wie ebenfalls durch die Pfeile gezeigt ist.

Die Kommissioniervorrichtung 60 dient darüber hinaus zur Überführung der in dem Einzelwarenlager 50 gelagerten Waren in die kommissionierten Ausgangseinheiten. Die fertig kommissionierten Ausgangseinheiten werden zur Belieferung der Einzelhandelsgeschäfte bzw. Filialen, wie durch den Pfeil 61 angedeutet, aus der Anlage wieder abgegeben.

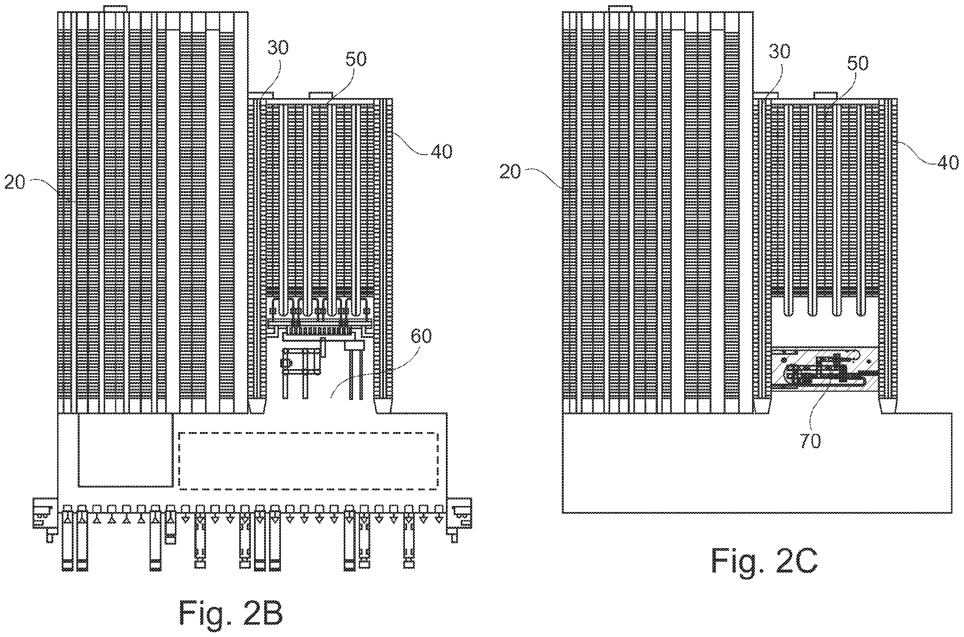

In den Figuren 2B und 2C ist die Gesamtanlage in zwei Ebenen noch einmal dargestellt, so dass ersichtlich ist, dass die Turmlagervorrichtung 70 und die Kommissioniervorrichtung 60 in unterschiedlichen Ebenen angeordnet sind.

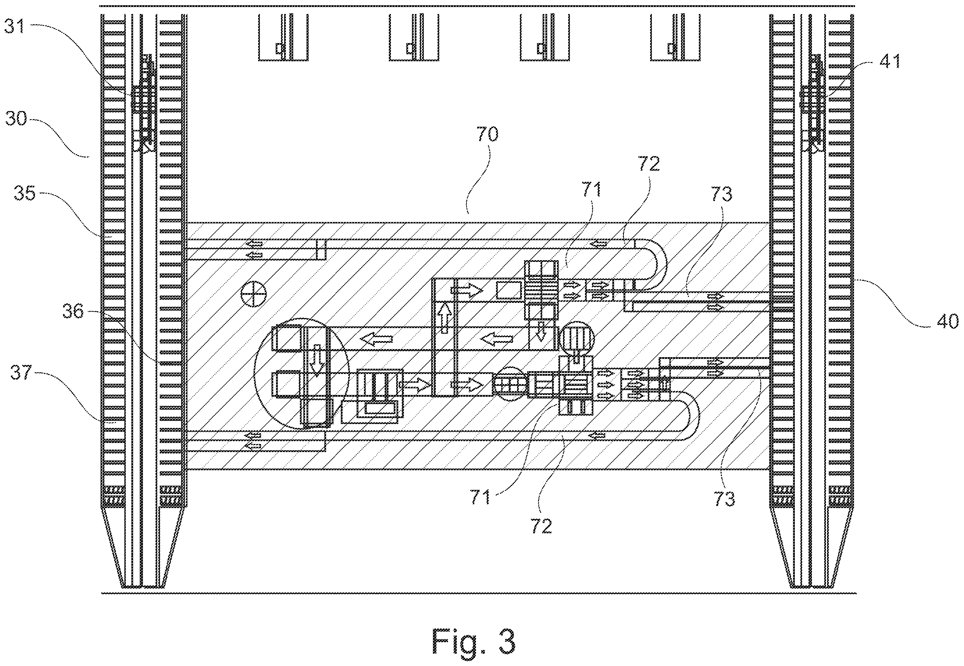

Die Figur 3 zeigt die Einrichtung zur Depalettierung und Einlagerung der Untereinheiten ins Turmlager 30, 40 (Turmlagervorrichtung 70). Die entsprechende Vorrichtung 70 umfasst zwei Palettenentfernungseinrichtungen 71, bei denen die Palettenstapel 1 über entsprechende Greifvorrichtungen geklammert werden, so dass die Palette 3 entfernt werden kann. Die leeren Paletten werden entsprechend von einem Stapelautomaten gestapelt und sortiert. Die Waren des Palettenstapels werden in separierten Türmen übereinander gestapelter Einzelwaren über Transporteinrichtungen 72 und 73 in Richtung der Turmlager 30, 40 befördert, die sich auf beiden Seiten der Turmlagervorrichtung 70 befinden. Da die Regalbediengeräte 31 und 41 der Turmlager 30, 40 Türme in zwei Reihen verarbeiten können, sind die Transportvorrichtungen 72, 73 so ausgelegt, dass sie in Doppelbahnen verzweigen, um die zweireihige Zuführung der Türme zu den Regalbediengeräten 31, 41 zu ermöglichen. Die Regalbediengeräte 31, 41 nehmen die Türme der Waren auf und lagern sie in das entsprechende Turmlager ein. Hierbei wird informationstechnisch festgehalten, welche Art von Ware an welchen Lagerplätzen im Turmlager 30, 40 eingelagert wird. Aus der Information, welche Art von Ware auf die Palettenentfernungseinrichtungen 71 aufgegeben worden ist, und der Anzahl der sich daraus ergebenden Türme lässt sich ohne große Identifizierungs- und Überwachungssysteme eine eindeutige Behandlung aller Waren durchführen, so dass genau bekannt ist, welche Waren wo im Turmlager 30, 40 gelagert sind. Lediglich einfache Kontrollstationen, wie beispielsweise Zählstationen in Form von Lichtschranken und dergleichen, können entlang der Transportvorrichtungen 72, 73 vorgesehen sein, um zu überprüfen, ob die entsprechenden Türme abgearbeitet worden sind.

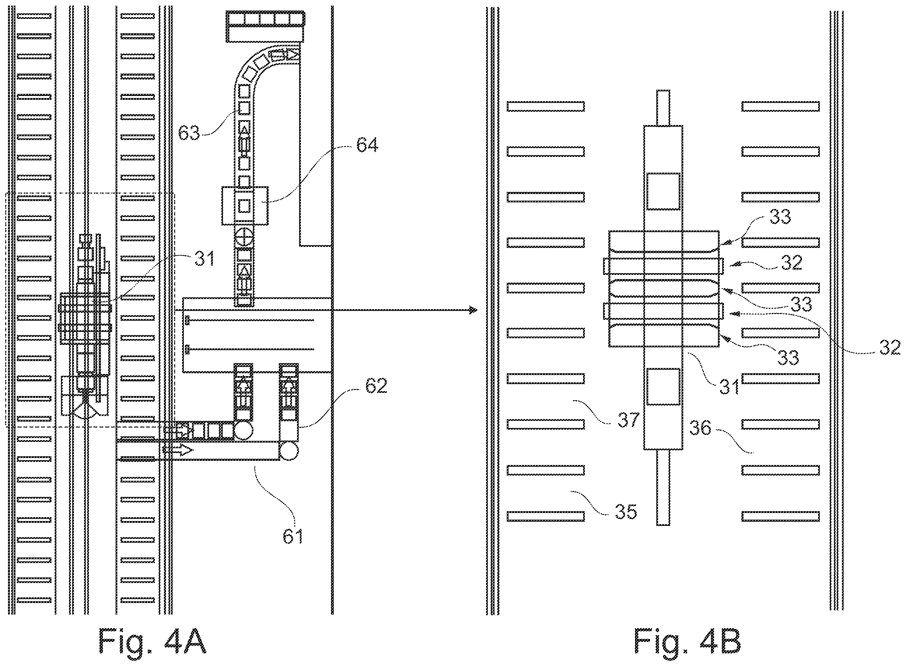

Die Figuren 4A und 4B zeigen die Ausbildung des Regalbediengeräts 31 im Detail. In der Figur 4A ist das Regalbediengerät 31 im Bereich der Kommissioniervorrichtung 60 gezeigt, die in der Anlage beispielsweise in einer Ebene oberhalb der Vorrichtung 70 zur Depalettierung und Einlagerung der Türme ins Turmlager angeordnet sein kann. Durch die Verfahrbarkeit des Regalbediengeräts in einer Ebene entlang des Turmlagers 30 bzw. 40 können die verschiedenen Stationen wie Kommissioniervorrichtung 60 und Vorrichtung 70 zur Depalettierung und Einlagerung im Turmlager in den verschiedenen Ebenen genauso wie alle Lagerplätze im Turmlager von dem Regalbediengerät angefahren werden.

Die Figur 4B zeigt das Regalbediengerät, welches in einer Mittelebene zwischen zwei Regalwänden innerhalb der Ebene frei beweglich ist, so dass sämtliche Lagerplätze der gegenüberliegenden Regalwände angefahren werden können. Das Regalbediengerät 31, das als Beispiel in Figur 4B gezeigt ist, weist zwei getrennt steuerbare Teleskopgabeln 32 auf, die insgesamt jeweils vier Türme hintereinander aufnehmen können. Zur seitlichen Stabilisierung sind entlang der Teleskopgabeln Stützwände 33 vorgesehen. Die Teleskopgabeln können quer zur Bewegungsrichtung des Regalbediengeräts 31 ausgefahren werden, um unter die Türme einzufahren und so die entsprechenden Türme aufzunehmen. Mittels der Teleskopgabeln können die Türme dann auch in die Lagerplätze des Turmlagers eingelagert und von diesen wieder entnommen werden.

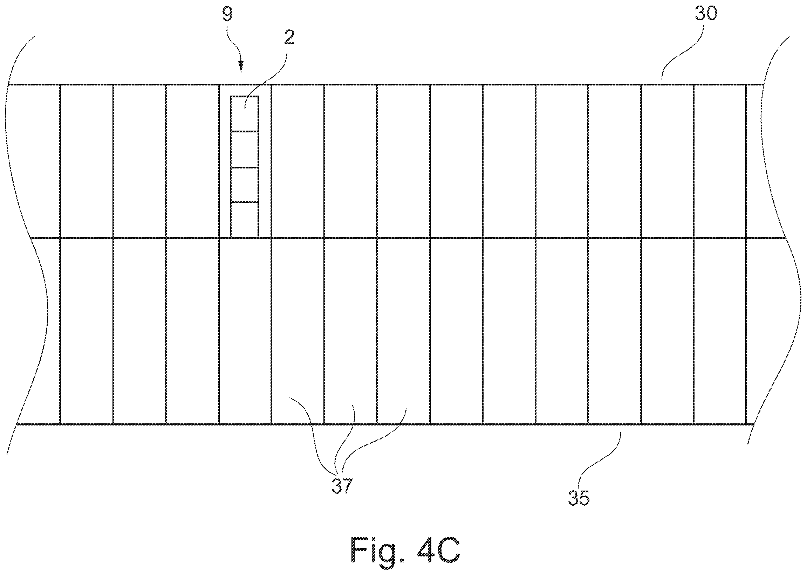

Die Figur 4C zeigt eine teilweise Seitenansicht einer Lagerwand 35 des Turmlagers 30. Bei dem gezeigten Ausführungsbeispiel ist eine Vielzahl von Lagerplätzen 37 für sortenreine Türme 9 aus den Einzelwaren 2 nebeneinander und in zwei Reihen übereinander vorgesehen. Selbstverständlich ist es jedoch auch möglich, mehrere Reihen übereinander anzuordnen. In den einzelnen Lagerplätzen 37 können die Türme 9 auch horizontal hintereinander gelagert werden. Im Turmlager 30 werden die Untereinheiten sortenrein, d. h. also nur Untereinheiten mit gleichen Einzelwaren 2, in den Lagerplätzen 37 gelagert, wobei über das Steuerungssystem in Form einer Datenverarbeitungsanlage mit entsprechendem Speichersystem bekannt ist, welche Art von Waren in welchen Lagerplätzen 37 gelagert ist, so dass das Regalbediengerät bei Anforderung bestimmter Waren diese entsprechend aus dem Turmlager holen kann.

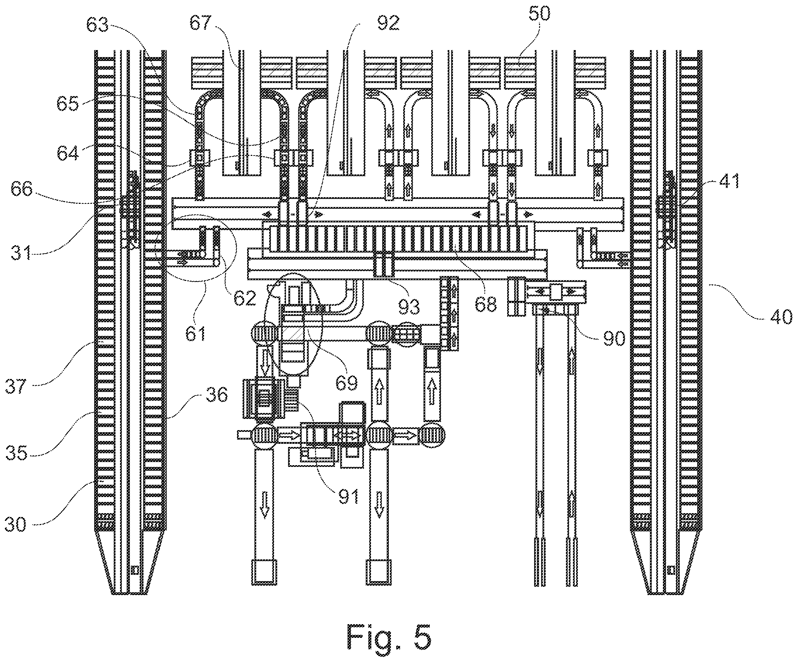

Die Figur 5 zeigt die Turmlager 30, 40 sowie die Kommissioniervorrichtung 60 und einen Teil des Einzelwarenlagers 50. Bzgl. der Turmlager 30, 40 sind die einzelnen Regalwände 35, 36 dargestellt, in deren Mitte und entlang deren Längsrichtung die Regalbediengeräte 31, 41 verfahren werden können. Die Regalbediengeräte 31, 41 dienen, wie im Zusammenhang mit der Vorrichtung 70 zur Depalettierung und Einlagerung der Untereinheiten im Turmlager gezeigt worden ist, zur Einlagerung der Türme im Turmlager sowie auch zur Auslagerung der Türme aus den Turmlagern 30, 40. Bei der Auslagerung der Türme holt das Regalbediengerät 31, 41 die von dem Steuerungssystem, welches in der Datenverarbeitungsanlage softwaretechnisch realisiert ist, angeforderten Waren aus den Lagerplätzen des Turmlagers 30 und übergibt die Türme an eine Auslagerstrecke 61 für die Türme aus dem Turmlager 30. Die Auslagerstrecke 61 ist so aufgebaut, dass zwei Transportwege 62, 63 genutzt werden können. Der eine Transportweg 62 führt die ausgelagerten Türme über die Verschiebeeinheiten 92 und 93 und den Pufferbereich direkt zur Palettiervorrichtung 69, in der entsprechende Warentürme zur Herstellung einer kommissionierten Ausgangseinheit auf einer Palette angeordnet werden, und/oder zur Beladestation 90 für Rollcontainer, so dass neben der Beladung einer Palette auch die Beladung von Rollcontainern in der Beladestation 90 möglich ist.

Der zweite Transportweg 63 für die Türme führt die Türme über eine Entstapeleinheit 64 in das Einzelwarenlager 50, wobei am Ende des Transportwegs 63 die Wareneinlagerungsstelle mit der Übergabe der Einzelwaren an das Regalbediengerät 53 vorgesehen ist. Bei der Entstapeleinheit 64 werden die gestapelten Türme in die Einzelwaren 2 getrennt, die dann einzeln in das Einzelwarenlager 50 eingelagert werden. Hierzu führt der Transportpfad 63 in den Bereich der Bewegungsebene 67 eines Regalbediengeräts 53 des Einzelwarenlagers 50. Da die Warentürme aus dem Turmlager 30 sortenrein sind und das Steuerungssystem weiß, welche Art von Waren aus dem Turmlager 30 zur Einlagerung in das Einzelwarenlager 50 angefordert worden ist, ist ohne Identifizierung der Einzelwaren eine definierte Einlagerung der Waren in das Einzelwarenlager 50 möglich, so dass das Steuerungssystem der Anlage, d. h. eine softwaregesteuerte Datenverarbeitungsanlage, weiß, welche Waren an welchem Lagerplatz im Einzelwarenlager 50 gelagert sind.

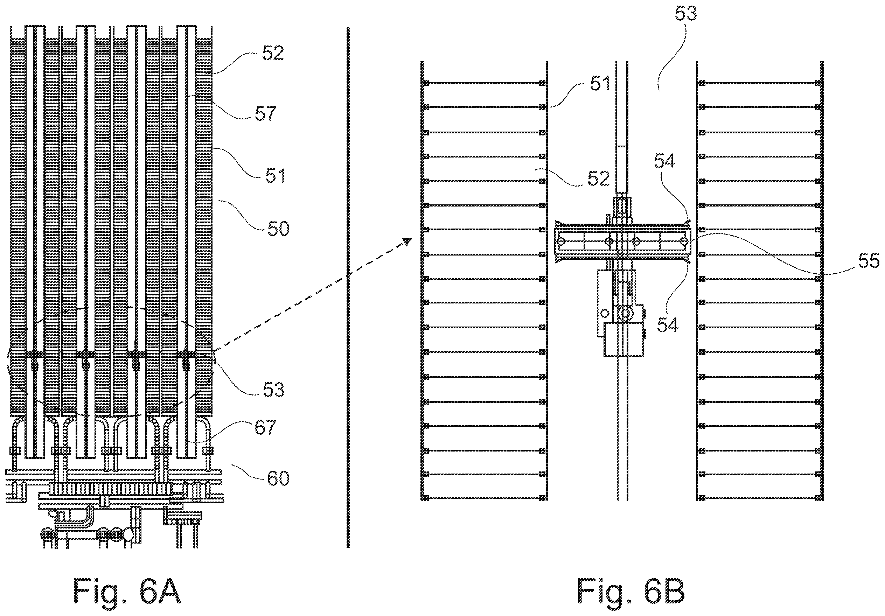

Zur Kommissionierung der Ausgangseinheit in Form einer gemischten Warenpalette in der Palettierstation 69 bzw. einer gemischten Warenzusammenstellung für einen Rollcontainer in der Beladestation 90 werden je nach Anzahl der einzelnen erforderlichen Waren die einzelnen Waren aus dem Einzelwarenlager 50 über ein entsprechendes Regalbediengerät 53 (siehe Figuren 6A und 6B) aus den Lagerplätzen des Einzelwarenlagers ausgelagert und/oder bei einer Anzahl von Waren, die es erlaubt, komplette Warentürme in die Ausgangseinheit zu integrieren, können entsprechende Warentürme direkt über die Auslagerstrecke 61 über den Transportpfad 62 zur Palettiereinheit 69 bzw. Beladestation 90 transportiert werden. Die Türme werden hierbei über den Transportpfad 62 zu einer Verschiebeeinheit 92 gebracht, welche mehrere Türme miteinander bewegt und somit entsprechend bereits eine teilweise Zusammenstellung der Waren für die Ausgangseinheit vornehmen kann. Die Verschiebeeinheit 92 kann sowohl Warentürme aus dem Transportpfad 62 aufnehmen als auch Warentürme, die durch eine Stapeleinheit 66 gebildet werden. Die Stapeleinheit 66 ist in einer Auslagerstrecke 65 des Einzelwarenlagers 50 integriert, auf der die von dem Regalbediengerät 53 aus dem Einzelwarenlager 50 geholten Einzelwaren zu der Stapeleinheit 66 transportier werden. Das Regalbediengerät 53 übergibt die Einzelwaren an der Warenauslagerungsstelle auf die Fördereinrichtung der Auslagerungsstrecke 65.

In der Stapeleinheit 66 werden die Einzelwaren zu einem Turm gestapelt, der an die Verschiebeeinheit 92 übergeben wird. Die entsprechenden Türme werden von der Verschiebeeinheit 92 über einen Pufferbereich 68 der Palettiervorrichtung 69 und/oder der Beladestation 90 für Rollcontainer zugeführt, von wo aus die entsprechenden kommissionierten Ausgangseinheiten auf LKWs zur Belieferung der Einzelhandelsgeschäfte bzw. Filialen geladen werden.

Wie sich aus der Darstellung der Figur 5 ergibt, zeichnet sich die Kommissioniervorrichtung insbesondere dadurch aus, dass kurze Wege vorhanden und/oder wenige zu überwachende Waren auf den verschiedenen Transportvorrichtungen unterwegs sind, so dass die Überwachung rein über gespeicherte Informationen erfolgen kann und keine Identifizierungseinheiten für die Waren in den Transportpfaden vorgesehen werden müssen. Dies wird insbesondere auch dadurch erreicht, dass die einzelnen Transportpfade keine Verzweigungen, Abzweigungen oder Zusammenführungen aufweisen, die eine Identifizierung der Waren erforderlich machen würde. Lediglich bei der Verschiebeeinheit 92 werden Türme direkt aus dem Turmlager 30 bzw. 40 und dem Einzelwarenlager 50 bzw. der Stapeleinheit 66 zusammengeführt.

Wie sich aus der Figur 5 weiterhin ergibt, umfasst die Kommissionieranlage mehrere Einzelwarenlager-Module 50 mit mehreren Reihen von Regalwänden und mehreren Regalbediengeräten sowie mehreren Ein- und Auslagerstrecken, die von der Verschiebeeinheit 92 bedient werden. Die verschiedenen Module mit jeweils zwei Regalwänden und den unterschiedlichen Regalbediengeräten dienen im Wesentlichen zur Erhöhung der Kapazität der Gesamtanlage, so dass die Module weitgehend unabhängig voneinander nebeneinander laufen. Lediglich die Verschiebeeinheit 92, der Puffer 68 und die Verschiebeeinheit 93 zur Bedienung der Palettiervorrichtung 69 und die Beladestation 90 für Rollcontainer werden gemeinsam genutzt, was jedoch informationstechnisch leicht handhabbar ist. Ansonsten ist es bevorzugt zur einfachen informationstechnischen Überwachung der Zusammenstellung der zu kommissionierenden Waren lediglich ein Regalbediengerät zur Auslagerung sämtlicher zu handhabenden Waren zu nutzen, um aufwändige Prozesse für die Zusammenführung unterschiedlicher Warenströme zu vermeiden. Allerdings kann das Einzelwarenlager 50 auch so aufgebaut sein, dass mehrere Regalbediengeräte pro Einzelwarenlager oder -modul vorgesehen sind und die verschiedenen Waren in unterschiedlichen Abschnitten mit jeweils einem Regalbediengerät angeordnet sind und die Zusammenführung im Pufferbereich 68 informationstechnisch organisiert und überwacht wird.

Die Figur 6 zeigt in den Teilbildern A und B vier Einzelwarenlager-Module 50 mit insgesamt acht Regalwänden 51, in denen Lagerplätze 52 für die Einzelwaren übereinander und nebeneinander angeordnet sind. Die Einzelwarenlager-Module 50 der Figur 6A umfassen vier Regalbediengeräte 53, die entlang der Transportebenen 57 verfahrbar sind, so dass alle Lagerplätze 52 bedient werden können. Die Transportebene 57 ist an den Stirnseiten als Transportpfad 67 in den Bereich der Kommissioniervorrichtung 60 herausgeführt, um die einzelnen Waren auslagern zu können. Jedes Einzelwarenlager-Modul 50 umfasst ein Regalbediengerät 53 und zwei Regalwände 51.

Die Figur 6B zeigt ein Regalbediengerät 53 im Detail, wie es zu den Lagerplätzen 52 der gegenüberliegenden Regalwände 51 angeordnet wird.

Das Regalbediengerät 53 umfasst eine Teleskopgabel 55 mit Riemenförderer, über welchen die einzelnen Waren, wie beispielsweise Getränkekisten, in die Lagerplätze 52 eingelagert und aus diesen ausgelagert werden können. Das Regalbediengerät 53 kann auf der Teleskopgabel 55 mit Riemenförderer insgesamt zehn Einzelkisten gleichzeitig transportieren. Seitlich von der Teleskopgabel mit Riemenförderer 55 sind Zentriervorrichtungen 54 zum Zentrieren unterschiedlich breiter Kistenreihen vorgesehen.

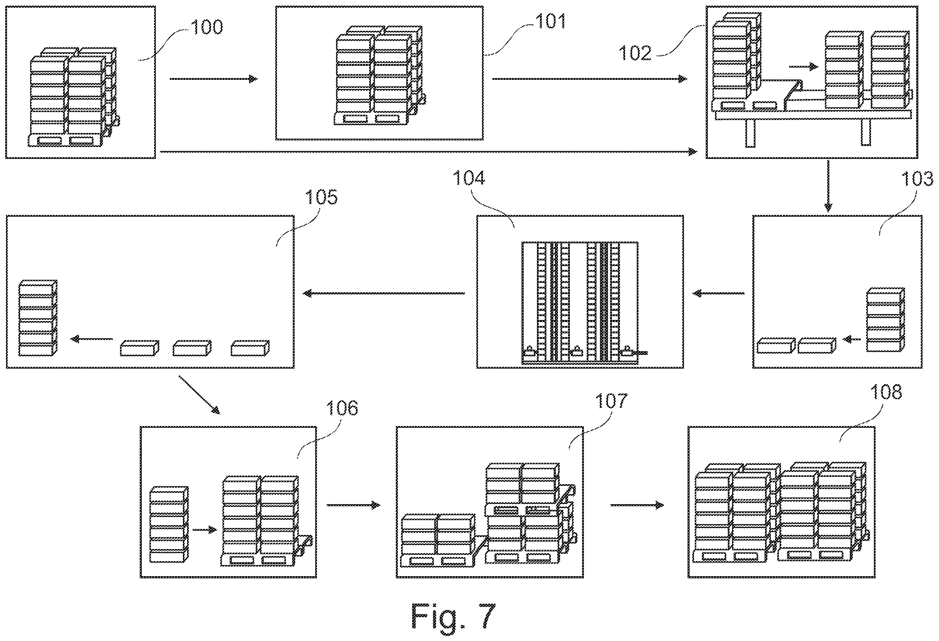

Die Fig. 7 zeigt ein schematisches Ablaufdiagramm zur Konzeptbeschreibung der vorliegenden Erfindung anhand einer beispielhaften Ausführungsform.

Zunächst wird beim Wareneingang 100 eine Eingangseinheit eines Lieferanten mit einer sortenreinen Verpackungs- und Versandeinheit aus einer Vielzahl von Einzelwaren erhalten. Die Eingangseinheit besteht im vorliegenden Fall aus einem Palettenstapel, der auf einer handelsüblichen Euro-Palette gelagert sein kann.

Vom Wareneingang 100 wird die Eingangseinheit entweder in ein Palettenlager 101 überführt, wo sie auf die weitere Verarbeitung wartet. Das Palettenlager 101 stellt somit einen Puffer für den Verarbeitungsprozess dar. Alternativ kann die Eingangseinheit aus dem Wareneingang 100 direkt an eine Depalettierstation 102 überführt werden, wo die Einzelwaren von der Palette, also dem Ladungsträger entfernt werden. Zu der Depalettierstation, welche als Vereinzelungsstation zur Bildung von Untereinheiten (Einzelwarentürme) dient, können auch die Paletten aus dem Palettenlager 101 angeliefert werden.

Wie sich aus der Darstellung der Fig. 7 ergibt, werden die Einzelwaren der Eingangseinheit in der Depalettierstaion, die in nebeneinander angeordneten Stapeln, sogenannten Türmen, angeordnet sind, derart vereinzelt, dass die einzelnen Türme von der Palette entfernt werden.

Die Stapel bzw. Türme aus Einzelwaren, die sogenannten Untereinheiten werden in einer geschlossenen Einheit, also in Form der Türme zur Entstapelungsstation 103 transportiert. Den entsprechenden Transport in Turm- bzw. Stapelform nennt man auch Stapeltransport. Obwohl bei dem gezeigten Ausführungsbeispiel die Einzelwaren tatsächlich als Stapel mit übereinander angeordneten Einzelwaren transportiert werden, kann der sogenannte Stapeltransport auch in jeder anderen Weise, also auch in der Form einer Einheit nebeneinander liegender Waren oder dergleichen stattfinden.

Bei der Entstapelungsstation 103 werden die Warenstapel der Einzelwaren in einzelne Einzelwaren zerlegt, die in ein Einzelwarenlager 104 eingelagert werden. Da die Einzelwaren im vorliegenden Ausführungsbeispiel entsprechend einzeln in Behältern angeordnet sind, wie zum Beispiel Frischfleisch in entsprechenden Behältern oder Schalen, kann das Einzelwarenlager 104 auch als Behälterlager bezeichnet werden. Insbesondere kann das Einzelwarenlager 104, wie in der Fig. 7 angedeutet, als Hochregallager mit paarweise zueinander angeordneten Hochregalen ausgebildet sein, zwischen denen ein Regalfahrzeug, ein sogenanntes Lagerbediengerät (Picking-mini-load PML) die Einzelwaren oder die entsprechenden Behälter in die Lagerfächer der gegenüberliegenden Hochregale ein- und auslagert.

In dem Einzelwarenlager 104 sind sämtliche Waren gelagert, die für eine beliebige Zusammenstellung einer Ausgangseinheit erforderlich sind. Das heißt sämtliche Waren, die beispielsweise zum Sortiment eines Einzelhandelsgeschäftes einer Filialkette gehören sind in den entsprechenden Einzelwarenlager 104 gelagert. Lediglich einige wenige Waren, beispielsweise in der Größenordnung von weniger als 10 % des gesamten Warensortiments können außerhalb des automatischen Kommissioniersystems kommissioniert werden, da bei Waren aus dem Sortiment, die beispielsweise wenig oder selten verkauft werden die Belegung eines Lagerplatzes in dem Einzelwarenlager 104 aufgrund des geringen Bedarfs zu aufwendig wäre.

Bei der Zusammenstellung einer Ausgangseinheit, also der Kommissionierung eines Auftrags, werden die entsprechenden Einzelwaren aus dem Einzelwarenlager 104 ausgelagert und zu einer Stapelstation 105 transportiert, wo die nunmehr verschiedenen Waren wieder zu einem Stapel, das heißt einem Warenturm zusammengefügt werden. Ein entsprechender Warenstapel bzw. Turm wird anschließend zu einer Palettierstation 106, welche auch als Verpackungsstation bezeichnet werden kann, transportiert, um dort auf einer entsprechenden Palette angeordnet zu werden. Eine weitere Verpackungsstation kann eine Palettenstapelung vorsehen, wobei die hier gebildeten Doppelstockpaletten in den Versandbereich 108 abgegeben werden, wo sie beispielsweise entsprechend auf Lkw verladen werden.

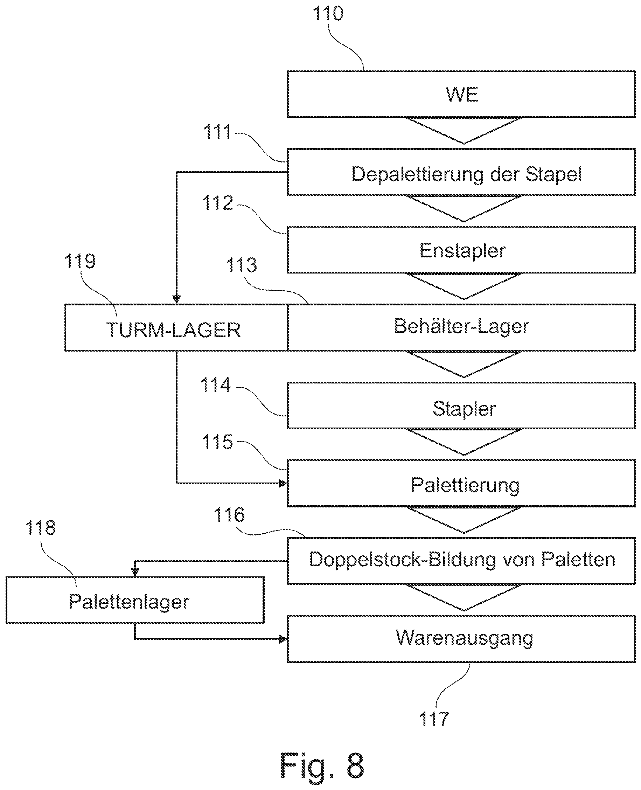

Die Fig. 8 beschreibt den prinzipiellen Ablauf des erfindungsgemäßen Kommissionierverfahrens in einem schematischen Ablaufdiagramm. Nach dem Wareneingang 110 von sortenrein angelieferten Waren, die beispielsweise auf Euro-Paletten gestapelt sind, aber auch auf jede andere Art und Weise verpackt sein können, wird die Eingangseinheit in einer Depalettierstation 111 in einzelne Einzelwaren oder Gruppen von Einzelwaren zerlegt. Bei dem beschriebenen Ausführungsbeispiel handelt es sich um eine Vereinzelung der auf der Palette befindlichen Stapel. Diese werden zu einem entsprechenden Entstapler 112 weiter befördert, wo die Stapel weiter vereinzelt werden und zwar in die entsprechenden Einzelwaren. Diese werden dann in ein Einzelwarenlager 113 bzw. Behälterlager 113 eingelagert, wenn es sich bei den Einzelwaren um in Behälter gelagerte Waren handelt. Parallel zu diesem Zweig können die von der Palette entnommenen Stapel auch direkt in ein sogenanntes Turmlager 119 eingelagert werden, bei dem also die Stapel nicht weiter vereinzelt werden, sondern die Einzelwaren in dem Stapel geschlossen transportiert und gelagert werden. Darüber hinaus ist es auch möglich, dass weitere Untereinheiten gebildet werden, zum Beispiel bei dem Entstapler 112 die Stapel nicht in einzelne Einzelwaren zerlegt werden, sondern Untereinheiten von Türmen bei behalten werden, die beispielsweise nur den halben Stapel der Einzelwaren umfassen, die ursprünglich in einem Stapel oder Turm auf der Palette angeordnet waren.

Aus dem Einzelwarenlager 113, in dem die Einzelwaren einzeln auf entsprechenden Lagerplätzen angeordnet sind und dort auch einzeln entnommen werden können, auch wenn beispielsweise mehrere Einzelwaren hintereinander in mehreren nebeneinander angeordneten Lagerplätzen angeordnet sind, werden die Einzelwaren entsprechend eines Auftrags zur Zusammenstellung einer Ausgangseinheit wieder entnommen, wobei die Entnahme der Einzelwaren in einer Sequenz erfolgt, mit der die Einzelwaren anschließend auf eine Palette zur Bildung der Ausgangseinheit gestapelt werden. Die Sequenz der ausgelagerten Einzelwaren beinhaltet also entsprechend des Auftrags zur Bildung einer Ausgangseinheit die verschiedenen Waren, die die Ausgangseinheit bilden. Eine Sequenz der auszulagernden Waren umfasst dabei die Anzahl der unterschiedlichen Einzelwaren, die zur Bildung der Ausgangseinheit benötigt werden. Die aus dem Einzelwarenlager 113 entnommenen Einzelwaren werden einem Stapler 114 zugeführt, wo sie entsprechend gestapelt werden, um Stapel zu bilden, die direkt auf der Palette der Ausgangseinheit angeordnet werden können. Die Stapel werden zu einer Palettierstation 115 transportiert, wo sie auf einer Palette angeordnet werden können. Anstelle einer Palettierstation können auch andere Verpackungsstationen vorgesehen sein, in welchen beliebige Untereinheiten von zusammen gefassten Einzelwaren verpackt werden können.

Parallel zur Stapelung und Palettierung von Einzelwaren aus dem Einzelwarenlager 113 können aus dem Turmlager 119 auch komplette Untereinheiten, das heißt Stapel bzw. Türme von sortenreinen Einzelwaren, die dort gelagert worden sind, entnommen werden, sofern der Auftrag zur Bildung der Ausgangseinheit eine derart große Anzahl von gleichartigen Einzelwaren beinhaltet, sodass auf der Palette der Ausgangseinheit ein Stapel dieser Waren gebildet werden kann. Entsprechend kann man sich für diese Waren das Entstapeln und Neustapeln sparen und die Waren direkt aus einem entsprechenden Turmlager 119 zur Palettierstation 115 führen.

Nach der Palettierung 115 werden bei dem gezeigten Ausführungsbeispiel die gebildeten Paletten noch übereinander gestapelt, um Doppelstockpaletten zu bilden. Dies erfolgt in der Palettenpalettierstation 116.

Die so gebildeten Ausgangseinheiten können in einem entsprechenden Lager, beispielsweise einem Palettenlager 118 zwischen gelagert werden oder direkt dem Warenausgang 117 zugeführt werden wo sie entsprechend verladen und abtransportiert werden.

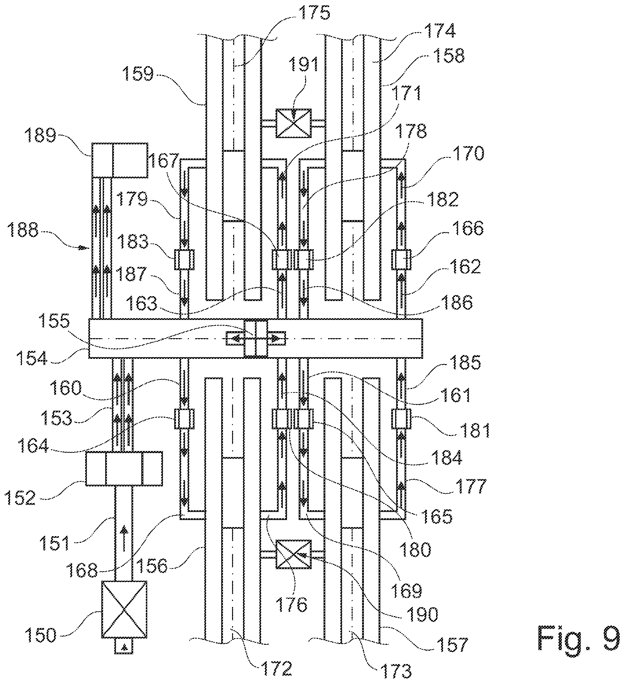

Die Fig. 9 zeigt eine schematische Draufsicht auf eine Kommissionieranlage, wie sie gemäß den Prinzipien der vorliegenden Erfindung aufgebaut sein kann.

Die Kommissionieranlage der Fig. 9 umfasst einen Wareneingang 150, der entweder durch einen Übergabepunkt der Paletten aus einem Palettenlager gebildet sein kann, oder eine unmittelbare Anlieferung von Eingangseinheiten darstellen kann, die beispielsweise über LKWs oder dergleichen angeliefert werden. Die Eingangseinheiten, die beim Wareneingang 150 eingehen, werden über eine Förderstrecke 151 zu einer ersten Vereinzelungsstation in Form einer Depalettierstation 152 befördert, wo die Einzelwaren, beispielsweise Getränkekisten oder Behälter mit entsprechenden Waren oder sonstige Einzelwaren, von der Transportvorrichtung, wie beispielsweise einer Palette, getrennt werden. Dies kann beispielsweise dadurch erfolgen, dass die auf der Palette gelagerten Stapel aus Einzelwaren durch eine Schiebeeinrichtung von der Palette auf eine weitere Förderstrecke 153 abgeschoben werden. Die Förderstrecke 153 kann aus zwei parallel nebeneinander angeordneten Förderbänder oder Rollenfördereren bestehen, die die Stapel bzw. Türme aus den sortenreinen Einzelwaren in Richtung einer Querverschiebeeinheit 154 transportieren, bei der entlang eines Querverschiebeweges ein Querverschiebewagen 155 verfahrbar ist. Der Querverschiebewagen 155 ist so ausgebildet, dass er die Stapel, die zweireihig auf den parallel angeordneten Transportpfaden der Förderstrecke 153 angeliefert werden gleichzeitig parallel nebeneinander aufnehmen kann. Bei der Querverschiebung quer zu der Förderstrecke 153 können die Staple an sortenreinen Waren zu vier gleichartig aufgebauten Modulen der Kommissionieranlage befördert werden, die jeweils ein Einzelwarenlager 172, 173, 174 und 175 aufweisen. Die Anlage mit den Modulen 156, 157, 158 und 159 ist mit jeweils zwei Modulen gegenüberliegend und nebeneinander kompakt in einer Rechteckform aufgebaut. Jedes Modul 156, 157, 158, 159 umfasst neben dem Einzelwarenlager 172, 173, 174, 175 mit jeweils einem Regalfahrzeug (Picking-mini-load PML) zwei Hochregale, zwischen denen das Regalfahrzeug (PML) entlang eines Transportpfades verfahrbar ist, um so die beiden Hochregale beidseits des Transportpfades des Regalfahrzeugs PML bedienen zu können, um somit sämtliche Lagerplätze der beiden Hochregale ansteuern zu können. In jedem Modul 156, 157, 158, 159, sind sämtliche Einzelwaren gelagert, die durch die Kommissionieranlage kommissioniert werden sollen, das heißt, die potenziell in einem Auftrag zur Bildung einer Ausgangseinheit enthalten sein können. Die Einzelwaren sind auf Einzelwarenlagerplätze gelagert, sodass sie einzeln eingelagert und wieder entnommen werden können.

Zur Einlagerung werden die Einzelwaren in Form der Stapeltürme durch den Querverschiebewagen 155 zu den jeweiligen Einlagerungsstrecken 160, 161, 162 und 163 der Module 156, 157, 158, 159 transportiert, um dort auf die entsprechenden Einlagerungsstrecken 160, 161, 162 und 163 übergeben zu werden.

In der Einlagerungsstrecke 160, 161, 162, 163 befindet sich jeweils ein Entstapler 164, 165, 166, 167, bei dem die Warenstapel bzw. Türme in Form einer zweiten Vereinzelungsstation in entsprechende Einzelwaren vereinzelt werden. Diese werden dann auf dem zweiten Teil der Einlagerungsstrecke 168, 169, 170, 171 zu Wareneinlagerungsstellen der Einzelwarenlager 172, 173, 174, 175 befördert, wo sie an das jeweilige Regalfahrzeug PML übergeben werden, um dort von diesem in die entsprechenden Lagerplätze der Einzelwarenlager 172, 173, 174 und 175 eingelagert zu werden.

Sobald ein Auftrag zur Bildung einer Ausgangseinheit eingeht, werden die verschiedenen Waren, die zur Bildung der Ausgangseinheit erforderlich sind, aus einen einzigen Einzelwarenlager 172, 173, 174, 175 über die Regalfahrzeuge PML ausgelagert und an der entsprechenden Warenauslagerungsstelle der jeweiligen Warenauslagerungsförderstrecke 176, 177, 178, 179 übergeben, auf der sie zu einer Stapeleinrichtung 180, 181, 182, 183 befördert werden, wo sie wieder zu entsprechenden Stapeltürmen zusammengestellt werden. Diese Stapeltürme aus verschiedenen Einzelwaren werden über die Auslagerungsförderstrecke 184, 185, 186, 187 zu dem Querverschiebewagen 155 transportiert, der die Stapeltürme mit verschiedenen Einzelwaren aufnimmt und auf die Stapelauslagerungsstrecke 188 transportiert, die die Stapeltürme beispielsweise in zwei nebeneinander angeordneten Transportpfaden zu einer Verpackungsstation in Form einer Palettierstation 189 transportiert. Dort wird die endgültige Ausgangseinheit mit mehreren nebeneinander auf einer Palette angeordneten Stapeltürmen aus unterschiedlichen Einzelwaren gebildet, welche dann beispielsweise durch LKWs abtransportiert und an die entsprechenden Einzelhandelsgeschäfte einer Einzelhandelskette ausgeliefert werden können.

Zwischen den Modulen 156 und 157 ist eine Modulwechseleinheit 190 und zwischen den Einzelwarenlagern 174 und 175 der Module 158 und 159 eine Modulwechseleinrichtung 191 vorgesehen, welche den Austausch von Einzelwaren zwischen den verschiedenen Modulen ermöglicht. Damit können auf kurzem Wege Waren, die bei einem Modul 156, 157, 158, 159 benötigt werden, auf kurzem Wege von einem anderen Modul zugeführt werden.

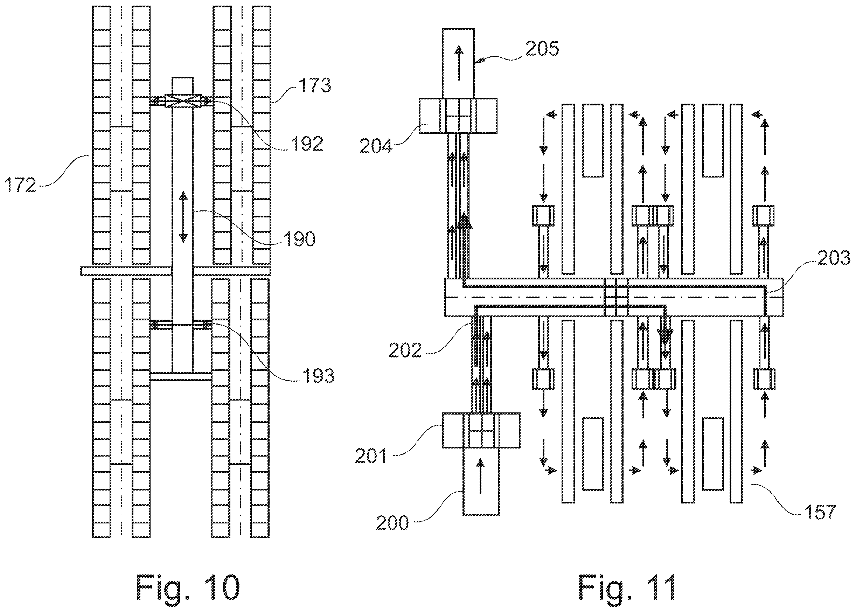

Die Fig. 10 zeigt die Ausbildung und Wirkungsweise einer entsprechenden Modulwechselvorrichtung an dem Beispiel der Modulwechselvorrichtung 190.

Die Fig. 10 zeigt die Anordnung der beiden Hochregallager 172 und 173, die zwischen sich die entsprechenden Modulwechselvorrichtung 190 aufweisen. Da die Hochregallager bzw. Einzelwarenlager 172 und 173 aus übereinander angeordneten Hochregallagern mit jeweils einem Regalfahrzeug PML gebildet sind, ist die Modulwechselvorrichtung 190 mit zwei Horizontalförderern 192 und 193 ausgestattet, die über eine Hebeeinrichtung in die entsprechende Höhenlage der jeweiligen Regalfächer gebracht werden können, um dort durch eine horizontal Verschiebung einen Austausch von Einzelwaren zu ermöglichen.

Die Fig. 11 zeigt in einer weiteren Darstellung die sequenzierte Einlagerung von Waren und insbesondere die sequenzierte Auslagerung der Waren aus der Kommissionieranlage.

Bei 200 werden die Eingangseinheiten der Kommissionieranlage zugeführt, um bei der Depalettierstation 201 in einzelne Stapel aufgeteilt zu werden. Die Stapel werden bei dem gezeigten Ausführungsbeispiel gemäß dem Transportpfad 202 in das Modul 157 eingelagert, wo sie über den Entstapler in das Einzelwarenlager eingelagert werden. Die Einlagerung erfolgt hier ebenfalls sequenziert, das heißt eine Eingangseinheit wird komplett in einer Sequenz ohne Unterbrechung des Einlagerungsvorgangs eingelagert, wobei die Einlagerung nicht in einem einzigen Modul erfolgen muss, sondern die Einlagerung auch auf mehrere Module verteilt erfolgen kann.

Ist die Einlagerungssequenz beendet, steht der Querverschiebewagen, wie er in Fig. 9 mit 155 bezeichnet ist, für eine Auslagerungssequenz bereit, wobei bei dem gezeigten Ausführungsbeispiel der Fig. 11 aus demselben Modul 157 nun eine sequenzierte Auslagerung der Einzelwaren erfolgt. Sequenzierte Auslagerung bedeutet hierbei, dass sämtliche Waren zur Bildung einer Ausgangseinheit aus demselben Modul 157, das heißt aus dem dort vorhandenen Einzelwarenlager gewählt werden und in einer ununterbrochenen Sequenz zur Verpackungsstation 204 transportiert werden, wo sie im vorliegenden Beispiel auf einer Palette gestapelt werden. Die Auslagerungssequenz entlang des Auslagerungstransportpfades 203 erfolgt dabei in einem einzigen kontinuierlichen Ablauf ohne Unterbrechung, auch wenn sowohl kontinuierliche als auch diskontinuierliche Fördertechniken (Querverschiebungen) zum Einsatz kommen. Nach dem Auslagern aus dem Einzelwarenlager erfolgt zunächst eine Stapelung der nacheinander ausgelagerten Einzelwaren zur Bildung von Stapeltürmen, die dann weiterhin in Form der Stapeltürme bis zur Palettierstation 204 transportiert werden, wo die Stapeltürme auf entsprechende Paletten geschoben werden, um eine vollständige Ausgangseinheit in Form einer Stapelpalette zu bilden.

Die vorliegende Erfindung zeichnet sich insbesondere dadurch aus, dass folgende Merkmale verwirklicht werden:
1. Verfahren, Anlage, Vorrichtungen und System zur Kommissionierung,
   wobei sämtliche zu handhabenden Waren als Einzelwaren oder Einzelverpackungseinheiten (kleinste Verpackungseinheit mit identischen Waren) einzeln in definierte Lagerplätze eines Einzelwarenlagers eingelagert und von dort direkt in eine kommissionierte Verpackungs- und Versandeinheit eingestellt werden.
2. Verfahren, Anlage, Vorrichtungen und System zur Kommissionierung,
   wobei zu handhabende Waren aus einem Einzelwarenlager auf einem Transportpfad ohne Verzweigungen, Abzweigungen und/oder Zusammenführungen zu einer Vorrichtung zur Bildung von kommissionierten Verpackungs- oder Versandeinheiten geführt werden.
3. Verfahren, Anlage, Vorrichtungen und System zur Kommissionierung,
   wobei sämtliche zu handhabenden Waren in einem Einzelwarenlager gelagert sind.
4. Verfahren, Anlage, Vorrichtungen und System zur Kommissionierung,
   wobei die Überwachung der Zusammenstellung im Hinblick auf die Identität der Waren nur informationstechnisch erfolgt.
5. Verfahren, Anlage, Vorrichtungen und System zur Kommissionierung,
   wobei ein Untereinheitenlager (Turmlager) zur Lagerung von sortenreinen Untereinheiten einer Verpackungs- bzw. Versandeinheit vorgesehen ist, welches im Sinne des Materialflusses zwischen einem Palettenlager (Lager zur Lagerung von sortenreinen Versand- bzw. Verpackungseinheiten) und einem Einzelwarenlager vorgesehen ist.
6. Verfahren, Anlage, Vorrichtungen und System zur Kommissionierung,
   wobei Untereinheiten aus einem Untereinheitenlager sowohl in ein Einzelwarenlager als auch direkt in eine Vorrichtung zur Bildung einer kommissionierten Verpackungs- und/oder Versandeinheit überführt werden.
7. Verfahren, Anlage, Vorrichtungen und System zur Kommissionierung,
   wobei die Waren und/oder Warenuntereinheiten durch ständige Speicherung ihrer Aufenthaltsorte und/oder ihrer Transportpfade überwacht werden.
8. Verfahren, Anlage, Vorrichtungen und System zur Kommissionierung,
   wobei zur Zusammenstellung von Verpackungs- oder Versandeinheiten mit gemischten Stapeln die gespeicherte Information über den Aufenthaltsort und Informationen über Transportaktionen sowie nach Transportaktionen aktualisierte Speicherinformationen über den Aufenthaltsort genutzt werden.
9. Verfahren, Anlage, Vorrichtungen und System zur Kommissionierung von Waren,
   wobei zur Kommissionierung von Verpackungs- oder Versandeinheiten aus beliebigen Waren in Einzelverpackungen, Behältern und/oder Unterverpackungseinheiten keine physikalische Identifizierung und/oder direkte Zielverfolgung der Waren innerhalb des Systems zwischen einem Wareneingang mit einer Depalettierung sortenreiner Waren und einem Warenausgang mit einer Stapelung und/oder Verpackung kommissionierter Ware erfolgt.
10. Kommissionieranlage zum vollautomatischen Umpacken von Einzelwaren aus einer Eingangseinheit (1) mit einer Vielzahl gleicher Einzelwaren (2) in eine Ausgangseinheit (10) mit einer Vielzahl unterschiedlicher Einzelwaren, wobei die Kommissionieranlage umfasst:
   - eine Vereinzelungsstation zur Vereinzelung der Einzelwaren, die in einer Eingangseinheit aus einer Vielzahl gleicher Waren angeliefert werden, in Einzelwaren und/oder Untereinheiten aus mehreren Einzelwaren,
   - ein Einzelwarenlager, in welchem für jede Art von Einzelware ein Lagerplatz vorgesehen ist, mit einer Wareneinlagerungsstelle und einer Warenauslagerungsstelle,
   - eine Stapel- und/oder Verpackungsstation zur Zusammenstellung verschiedener Einzelwaren und/oder Untereinheiten in einer Ausgangseinheit,
   wobei zwischen der Vereinzelungsstation und der Wareneinlagerungsstelle eine erste Förderstrecke und zwischen der Warenauslagerungsstelle und der Stapel- und/oder Verpackungsstation eine zweite Förderstrecke vorgesehen ist, wobei zumindest die zweite Förderstrecke derart ausgebildet ist, dass die Waren zwangsgeführt sind und/oder mit einer indirekten Zielverfolgung geführt werden.
11. Kommissionieranlage nach Merkmal 10, wobei die erste und/oder zweite Förderstrecke keine Abzweigungs-, Zusammenführungs- oder Kreuzungsstellen aufweisen.
12. Kommissionieranlage nach Merkmal 10 oder 11, wobei die erste und/oder zweite Förderstrecke eine Länge von weniger oder gleich 15 m, insbesondere weniger oder gleich 10 m aufweisen.
13. Kommissionieranlage nach einem der vorhergehenden Merkmale, wobei die indirekte Zielverfolgung eine rein informationstechnische Warenverfolgung beinhaltet.
14. Kommissionieranlage nach einem der vorhergehenden Merkmale, wobei die zweite Förderstrecke derart ausgebildet ist, dass die Waren zwangsgeführt sind und/oder mit einer indirekten Zielverfolgung geführt werden.
15. Kommissionieranlage nach einem der vorhergehenden Merkmale, wobei die gesamte Anlage so ausgebildet ist, dass die Einzelwaren unter Anwendung einer indirekte Zielverfolgung mit einer rein informationstechnischen Warenverfolgung bewegt werden.
16. Kommissionieranlage nach einem der vorhergehenden Merkmale, wobei die Kommissionieranlage mehrere Module (156, 157, 158, 159) umfasst, wobei ein Modul ein Einzelwarenlager (172, 173, 174, 175), eine Vereinzelungsstation (164, 165, 166, 167) und eine Stapel- und/oder Verpackungsstation (180, 181, 182, 183) umfasst.
17. Kommissionieranlage nach Merkmal 16, wobei mehrere Module (156, 157, 158, 159) mit eigenen Stapelstationen (180, 181, 182, 183) eine gemeinsame Verpackungsstation (189) aufweisen.
18. Kommissionieranlage nach einem der vorhergehenden Merkmale, wobei ein Untereinheitenlager (30, 40) vorgesehen ist, in dem sortenreine Untereinheiten aus mehreren gleichen Einzelwaren gelagert werden.
19. Kommissionieranlage zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei die Kommissionieranlage umfasst:
   - eine Vereinzelungsstation zur Vereinzelung der Einzelwaren, die in einer Eingangseinheit aus einer Vielzahl gleicher Waren angeliefert werden, in Einzelwaren und/oder Untereinheiten aus mehreren Einzelwaren,
   - ein Einzelwarenlager, in welchem für jede Art von Einzelware ein Lagerplatz vorgesehen ist, mit einer Wareneinlagerungsstelle und einer Warenauslagerungsstelle,
   - ein Untereinheitenlager zur Lagerung mehrerer sortenreiner Untereinheiten,
   - eine Stapel- und/oder Verpackungsstation zur Zusammenstellung verschiedener Einzelwaren in einer Ausgangseinheit,
   wobei die Anlage so ausgebildet ist, dass die Zusammenstellung der Ausgangseinheit sowohl direkt mit Untereinheiten aus dem Untereinheitenlager als auch mit Einzelwaren aus dem Einzelwarenlager erfolgen kann.
20. Kommissionieranlage nach Merkmal 18 oder 19, wobei eine dritte Förderstrecke vorgesehen ist, welche das Untereinheitenlager mit einer Vereinzelungsstation und/oder dem Einzelwarenlager verbindet.
21. Kommissionieranlage nach einem der Merkmale 18 bis 20, wobei eine vierte Förderstrecke vorgesehen ist, welche das Untereinheitenlager mit einer Verpackungsstation verbindet.
22. Verwendung eines vollautomatischen Einzelwarenlagers zur Kommissionierung von Einzelwaren durch sortenreines Einlagern von Einzelwaren aus einer Eingangseinheit (1) und gemischtes Auslagern von Einzelwaren in eine Ausgangseinheit (10).
23. Verfahren zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei das Verfahren die Schritte umfasst:
   - Vereinzeln einer angelieferten Eingangseinheit aus einer Vielzahl gleicher Waren in Einzelwaren,
   - Einlagern der Einzelwaren in ein Einzelwarenlager, in welchem für jede Art von Einzelware ein Lagerplatz vorgesehen ist,
   - Auslagern der Einzelwaren aus dem Einzelwarenlager zur Bildung der Ausgangseinheit in einer Sequenz, bis die Ausgangseinheit fertiggestellt ist,
   - Zusammenstellen der Sequenz verschiedener Einzelwaren in einer Ausgangseinheit.
24. Verfahren nach Merkmal 23, wobei das Vereinzeln auch das Vereinzeln in Untereinheiten aus mehreren Einzelwaren umfasst und die Zusammenstellung neben der Sequenz von Einzelwaren aus dem Einzelwarenlager Untereinheiten aus einem Untereinheitenlager umfasst.
25. Verfahren nach Merkmal 24, wobei der Transport der Untereinheiten vom Vereinzeln zum Zusammenstellen als Untereinheitentransport (Stapeltransport) als geschlossene Untereinheit erfolgt
26. Verfahren zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei das Verfahren die Schritte umfasst:
   - Vereinzeln einer angelieferten Eingangseinheit aus einer Vielzahl gleicher Waren in Einzelwaren und/oder Untereinheiten aus mehreren Einzelwaren,
   - Einlagern der Einzelwaren in ein Einzelwarenlager, in welchem für jede Art von Einzelware ein Lagerplatz vorgesehen ist,
   - Auslagern der Einzelwaren aus dem Einzelwarenlager zur Bildung der Ausgangseinheit,
   - Zusammenstellen verschiedener Einzelwaren und/oder Untereinheiten in einer Ausgangseinheit, wobei der Transport der Untereinheiten vom Vereinzeln zum Zusammenstellen als Untereinheitentransport (Stapeltransport) in der Gesamtheit der Einheit erfolgt.
27. Verfahren nach einem der Merkmale 123 bis 26, wobei der Transport teilweise zusammengestellter Einzelwaren, insbesondere gestapelte unterschiedliche Einzelwaren in entsprechenden Einheiten, insbesondere Stapeleinheiten erfolgt.
28. System zur Kommissionierung von Aufträgen durch vollautomatisches Umpacken von Einzelwaren aus einer Eingangseinheit (1) mit einer Vielzahl gleicher Einzelwaren in eine Ausgangseinheit (10) mit einer Vielzahl unterschiedlicher Einzelwaren mit einer vollautomatischen Kommissionieranlage, insbesondere mit einer Anlage nach einem der Merkmale 10 bis 22, wobei die Einzelwaren eine beliebige Oberfläche ohne Erkennungszeichen aufweisen.
29. System zur Kommissionierung von Aufträgen durch vollautomatisches Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, insbesondere mit einer Anlage nach einem der Merkmale 10 bis 22, wobei alle Einzelwaren zur Zusammenstellung einer Ausgangseinheit in einem Einzelwarenlager vorgehalten werden, in welchem für jede Art von Einzelware ein Lagerplatz vorgesehen ist.
30. System nach Merkmal 29 oder Kommissionieranlage nach einem der Merkmale 10 bis 22, wobei das Einzelwarenlager eine einzige Warenauslagerungsstelle aufweist.

Obwohl die vorliegende Erfindung anhand der Ausführungsbeispiele detailliert beschrieben worden ist, ist für den Fachmann selbstverständlich, dass die Erfindung nicht auf diese Ausführungsform beschränkt ist, sondern dass vielmehr Abwandlungen möglich sind, bei denen einzelne Merkmale weggelassen oder andersartige Kombinationen der Merkmale vorgenommen werden können, ohne dass der Schutzbereich der beigefügten Ansprüche verlassen wird. Die Erfindung umfasst insbesondere sämtliche Kombinationen aller vorgestellten Einzelmerkmale.

## Patentansprüche

1. Kommissionieranlage zum vollautomatischen Umpacken von Einzelwaren aus einer Eingangseinheit (1) mit einer Vielzahl gleicher Einzelwaren (2) in eine Ausgangseinheit (10) mit einer Vielzahl unterschiedlicher Einzelwaren, wobei die Kommissionieranlage umfasst:
- eine Vereinzelungsstation zur Vereinzelung der Einzelwaren, die in einer Eingangseinheit aus einer Vielzahl gleicher Waren angeliefert werden, in Einzelwaren, **gekennzeichnet dadurch, dass** die Kommissionieranlage umfasst:
- ein Einzelwarenlager, in welchem für jede Art von Einzelware ein Lagerplatz vorgesehen ist und das als automatisches Kleinteilelager mit einem verfahrbaren Lagerbediengerät ausgebildet ist und eine Wareneinlagerungsstelle und eine Warenauslagerungsstelle umfasst,
- eine Stapel- und/oder Verpackungsstation zur Zusammenstellung verschiedener Einzelwaren in einer Ausgangseinheit,
wobei zwischen der Vereinzelungsstation und der Wareneinlagerungsstelle eine erste Förderstrecke und zwischen der Warenauslagerungsstelle und der Stapel- und/oder Verpackungsstation eine zweite Förderstrecke vorgesehen ist, wobei zumindest an der zweiten Förderstrecke die Waren mit einer indirekten Zielverfolgung ohne direkte Erkennung der Einzelwaren anhand von Identifikationsstationen oder- systemen geführt werden,
wobei eine Information über die Identität einer bestimmten Ware dem System an einem bestimmten Startpunkt übergeben wird und dann lediglich mittels Sensoren festgestellt wird, dass irgendein Gegenstand die Förderstrecke passiert bzw. das Ziel erreicht hat.

2. Kommissionieranlage nach Anspruch 1,
**dadurch gekennzeichnet, dass**
die erste und/oder zweite Förderstrecke keine Abzweigungs-, Zusammenführungs- oder Kreuzungsstellen aufweisen und/oder eine Länge von weniger oder gleich 15 m, insbesondere weniger oder gleich 10 m aufweisen.

3. Kommissionieranlage nach einem der vorhergehenden Ansprüche,
**dadurch gekennzeichnet, dass**
die gesamte Anlage so ausgebildet ist, dass die Einzelwaren unter Anwendung einer indirekten Zielverfolgung mit einer rein informationstechnischen Warenverfolgung bewegt werden.

4. Kommissionieranlage nach einem der vorhergehenden Ansprüche,
**dadurch gekennzeichnet, dass**
die Kommissionieranlage mehrere Module (156, 157, 158, 159) umfasst, wobei ein Modul ein Einzelwarenlager (172, 173, 174, 175), eine Vereinzelungsstation (164, 165, 166, 167) und eine Stapel- und/oder Verpackungsstation (180, 181, 182, 183) umfasst.

5. Kommissionieranlage nach Anspruch 5,
**dadurch gekennzeichnet, dass**
mehrere Module (156, 157, 158, 159) mit eigenen Stapelstationen (180, 181, 182, 183) eine gemeinsame Verpackungsstation (189) aufweisen.

6. Kommissionieranlage nach einem der vorhergehenden Ansprüche,
**dadurch gekennzeichnet, dass**
eine Vereinzelungsstation zur Vereinzelung der Einzelwaren, die in einer Eingangseinheit aus einer Vielzahl gleicher Waren angeliefert werden, in Untereinheiten aus mehreren Einzelwaren und ein Untereinheitenlager (30, 40) vorgesehen sind, in dem sortenreine Untereinheiten aus mehreren gleichen Einzelwaren gelagert werden.

7. Kommissionieranlage zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei die Kommissionieranlage umfasst:
- eine Vereinzelungsstation zur Vereinzelung der Einzelwaren, die in einer Eingangseinheit aus einer Vielzahl gleicher Waren angeliefert werden, in Einzelwaren und/oder Untereinheiten aus mehreren Einzelwaren, **dadurch gekennzeichnet, dass** die Kommissionieranlage ferner umfasst:
- ein Einzelwarenlager, in welchem für jede Art von Einzelware ein Lagerplatz vorgesehen ist und das als automatisches Kleinteilelager mit einem verfahrbaren Lagerbediengerät ausgebildet ist und eine Wareneinlagerungsstelle und eine Warenauslagerungsstelle umfasst,
- ein Untereinheitenlager zur Lagerung mehrerer sortenreiner Untereinheiten,
- eine Stapel- und/oder Verpackungsstation zur Zusammenstellung verschiedener Einzelwaren in einer Ausgangseinheit,
wobei die Anlage so ausgebildet ist, dass die Zusammenstellung der Ausgangseinheit sowohl direkt mit Untereinheiten aus dem Untereinheitenlager als auch mit Einzelwaren aus dem Einzelwarenlager erfolgen kann.

8. Kommissionieranlage nach Anspruch 6 oder 7,
**dadurch gekennzeichnet, dass**
eine dritte Förderstrecke vorgesehen ist, welche das Untereinheitenlager mit einer Vereinzelungsstation und/oder dem Einzelwarenlager verbindet und/oder eine vierte Förderstrecke vorgesehen ist, welche das Untereinheitenlager mit einer Verpackungsstation verbindet.

9. Verfahren zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei das Verfahren eine Kommissionieranlage nach einem der Ansprüche 1 bis 6 verwendet und die Schritte umfasst:
- Vereinzeln einer angelieferten Eingangseinheit aus einer Vielzahl gleicher Waren in Einzelwaren,
- Einlagern der Einzelwaren in das Einzelwarenlager, in welchem für jede Art von Einzelware ein Lagerplatz vorgesehen ist,
- Auslagern der Einzelwaren aus dem Einzelwarenlager zur Bildung der Ausgangseinheit in einer Sequenz, bis die Ausgangseinheit fertiggestellt ist,
- Zusammenstellen der Sequenz verschiedener Einzelwaren in einer Ausgangseinheit.

10. Verfahren nach Anspruch 9,
**dadurch gekennzeichnet, dass**
das Vereinzeln auch das Vereinzeln in Untereinheiten aus mehreren Einzelwaren umfasst und die Zusammenstellung neben der Sequenz von Einzelwaren aus dem Einzelwarenlager Untereinheiten aus einem Untereinheitenlager umfasst, wobei insbesondere der Transport der Untereinheiten vom Vereinzeln zum Zusammenstellen als Untereinheitentransport (Stapeltransport) als geschlossene Untereinheit erfolgt.

11. Verfahren zum vollautomatischen Umpacken von Einzelwaren aus einer Eingangseinheit (1) mit einer Vielzahl gleicher Einzelwaren in eine Ausgangseinheit (10) mit einer Vielzahl unterschiedlicher Einzelwaren, wobei das Verfahren eine Kommissionieranlage nach einem der Ansprüche 7 bis 8 verwendet und die Schritte umfasst:
- Vereinzeln einer angelieferten Eingangseinheit aus einer Vielzahl gleicher Waren in Einzelwaren und/oder Untereinheiten aus mehreren Einzelwaren,
- Einlagern der Einzelwaren in das Einzelwarenlager, in welchem für jede Art von Einzelware ein Lagerplatz vorgesehen ist, und/oder Einlagern der Untereinheiten in das Untereinheitenlager,
- Auslagern der Einzelwaren und/oder Untereinheiten aus dem Einzelwarenlager oder Untereinheitenlager zur Bildung der Ausgangseinheit,
- Zusammenstellen verschiedener Einzelwaren und/oder Untereinheiten in einer Ausgangseinheit, wobei der Transport der Untereinheiten vom Vereinzeln zum Zusammenstellen als Untereinheitentransport (Stapeltransport) in der Gesamtheit der Einheit erfolgt.

12. Verfahren nach einem der Ansprüche 9 bis 11,
**dadurch gekennzeichnet, dass**
der Transport teilweise zusammengestellter Einzelwaren, insbesondere gestapelte unterschiedliche Einzelwaren in entsprechenden Einheiten, insbesondere Stapeleinheiten erfolgt.

13. System zur Kommissionierung von Aufträgen durch vollautomatisches Umpacken von Einzelwaren aus einer Eingangseinheit (1) mit einer Vielzahl gleicher Einzelwaren in eine Ausgangseinheit (10) mit einer Vielzahl unterschiedlicher Einzelwaren mit einer vollautomatischen Kommissionieranlage nach einem der Ansprüche 1 bis 8,
**dadurch gekennzeichnet, dass**
die Einzelwaren eine beliebige Oberfläche ohne Erkennungszeichen aufweisen.

## Claims

1. Order-picking installation for fully automated repacking of stock-keeping units from an inbound unit (1) having a plurality of identical stock-keeping units (2) to an outbound unit (10) having a plurality of different stock-keeping units, wherein the order-picking installation comprises:
- a separating station for separating the stock-keeping units, which are delivered in an inbound unit composed of a plurality of identical items, into stock-keeping units,
**characterised by the fact that**
the order-picking installation comprises:
- a small-parts store in which a storage location is provided for each kind of stock-keeping unit and which is configured as an automatic small parts store with a movable warehouse handling machine and comprises an item-storing position and an item-retrieval position,
- a stacking and/or packaging station for assembling different stock-keeping units into an outbound unit,
wherein, between the separating station and the item-storing position is provided a first handling section, and between the item-retrieval position and the stacking and/or packaging station is provided a second handling section, wherein at least at the second handling section, the items are guided with indirect target tracking without direct identification of the stock-keeping units by means of identification stations or systems, wherein information about the identity of a certain item is transferred to the system at a certain starting point and then it is established merely by means of sensors that any object has passed through the handling section or has reached the target.

2. Order-picking installation in accordance with claim 1,
**characterised by the fact that**
the first and/or second handling section does not have any branching, merging or intersection parts and has a length of less than or equal to 15 m, especially less than or equal to 10 m.

3. Order-picking installation in accordance with any of the preceding claims,
**characterised by the fact that**
the entire installation is configured such that the stock-keeping units are moved under application of indirect target tracking with purely informational item tracking.

4. Order-picking installation in accordance with any of the preceding claims,
**characterised by the fact that**
the order-picking installation comprises several modules (156, 157, 158, 159), wherein one module comprises a small-parts store (172, 173, 174, 175), a separating station (164, 165, 166, 167) and a stacking and/or packaging station (180, 181, 182, 183).

5. Order-picking installation in accordance with claim 4,
**characterised by the fact that**
several modules (156, 157, 158, 159) with their own stacking stations (180, 181, 182, 183) have a common packaging station (189).

6. Order-picking installation in accordance with any of the preceding claims,
**characterised by the fact that**
provided are a separating station for separating the stock-keeping units into sub-units of several stock-keeping units, which are delivered in an inbound unit composed of a plurality of identical items, and a sub-unit store (30, 40), in which single-type sub-units composed of several identical stock-keeping units are stored.

7. Order-picking installation for fully automated repacking of stock-keeping units from an unbound unit (1) having a plurality of identical stock-keeping units to an outbound unit (10) having a plurality of different stock-keeping units, wherein the order-picking installation comprises;
- a separating station for separating the stock-keeping units, which are delivered in an inbound unit composed of a plurality of identical items, into stock-keeping units and/or sub-units of several stock-keeping units,
**characterised by the fact that**
the order-picking installation further comprises
- a small-parts store in which a storage location is provided for each kind of stock-keeping unit and which is configured as an automatic small parts store with a movable warehouse handling machine and comprises an item-storing position and an item-retrieval position,
- a sub-units store for storing several single-type sub-units,
- a stacking and/or packaging station for assembling different stock-keeping units into an outbound unit,
wherein the installation is configured such that the assembly of the outbound unit can occur not only direct with sub-units from the sub-units store but also with stock-keeping units from the small-parts store.

8. Order-picking installation in accordance with claims 6 or 7,
**characterized by the fact that**
a third handling section is provided which connects the sub-units store with a separating station and/or the small-parts store and/or a fourth handling section is provided which connects the sub-units store with a packaging station.

9. Method for fully automated repacking of stock-keeping units from an inbound unit (1) having a plurality of identical stock-keeping units into an outbound unit (10) having a plurality of different stock-keeping units, wherein the method uses an order-picking installation in accordance with any of claims 1 to 6 and comprises the steps:
- separation of a delivered inbound unit composed of a plurality of identical items into stock-keeping units,
- storing of the stock-keeping units in the small-parts store in which a storage location is provided for each kind of stock-keeping unit,
- retrieval of the stock-keeping units from the small-parts store for the purpose of forming the outbound unit in a sequence until the outbound unit is finished.
- assembling the sequence of different stock-keeping units into an outbound unit.

10. Method according to claim 9,
**characterised by the fact that**
separation also comprises separation into sub-units composed of several stock-keeping units, and assembly, apart from the sequence of stock-keeping units from the small-parts store, comprises sub-units from a sub-units store, wherein especially the transport of the sub-units from separation to assembly as sub-unit transport (stack transport) proceeds as a closed sub-unit.

11. Method for fully automated repacking of stock-keeping units from an inbound unit (1) having a plurality of identical stock-keeping units into an outbound unit (10) having a plurality of different stock-keeping units, wherein the method uses an order-picking installation in accordance with any of claims 7 to 8 and comprises the steps:
- separation of a delivered inbound unit composed of a plurality of identical items into stock-keeping units and/or sub-units composed of several stock-keeping units,
- storing of the stock-keeping units in the small-parts store in which a storage location is provided for each kind of stock-keeping unit, and/or storing of the sub-units in the sub-units store,
- retrieval of the stock-keeping units and/or sub-units from the small-parts store or sub-units store for the purpose of forming an outbound unit,
- assembly of different stock-keeping units and/or sub-units into an outbound unit, wherein transport of the sub-units from separation to assembly as sub-unit transport (stack transport) proceeds in the totality of the unit.

12. Method in accordance with any of claims 9 to 11,
**characterised by the fact that**
the Transport of partially assembled stock-keeping units, especially different, stacked stock-keeping units, proceeds in corresponding units, especially stack units.

13. System for picking orders by fully automated repacking of stock-keeping units from an inbound unit (1) having a plurality of identical stock-keeping units into an outbound unit (10) having a plurality of different stock-keeping units with a fully automated order-picking installation in accordance with any of claims 1 to 8,
**characterised by the fact that**
the stock-keeping units have any kind of surface without identification markings.

## Revendications

1. Installation de préparation de commandes pour le reconditionnement entièrement automatique de marchandises au détail provenant d'une unité d'entrée (1) avec une multitude de mêmes marchandises au détail (2) dans une unité de sortie (10) avec une multitude de marchandises au détail différentes, l'installation de préparation de commandes comprenant :
- un poste de séparation pour séparer les marchandises au détail qui sont livrées dans une unité d'entrée à partir d'une multitude de mêmes marchandises en marchandises au détail,
**caractérisée en ce que** l'installation de préparation des commandes comprend :
- un entrepôt de marchandises au détail dans lequel un emplacement de stockage est prévu pour chaque type de marchandise au détail et qui est configuré comme un entrepôt automatique pour petites pièces avec un transstockeur déplaçable et qui comprend un emplacement de mise en stock des marchandises et un emplacement de prélèvement du stock des marchandises,
- un poste d'empilage et/ou d'emballage pour regrouper différentes marchandises au détail dans une unité de sortie,
cependant qu'il est prévu un premier chemin de transport entre le poste de séparation et l'emplacement de mise en stock et un second chemin de transport entre l'emplacement de prélèvement du stock et le poste d'empilage et/ou d'emballage, cependant que les marchandises sont guidées, au moins sur le second chemin de transport, avec une poursuite de but indirecte sans reconnaissance directe des marchandises au détail à l'aide de postes ou de systèmes d'identification, cependant qu'une information sur l'identité d'une marchandise déterminée est transmise au système à un point de départ déterminé et qu'il n'est ensuite constaté qu'au moyen de capteurs qu'un objet quelconque passe par le chemin de transport ou a atteint le but.

2. Installation de préparation de commandes selon la revendication 1, **caractérisée en ce que** le premier et/ou le second chemin de transport ne présente pas d'endroits de bifurcation, de regroupement ou d'intersection et/ou ont une longueur inférieure ou égale à 15 m, en particulier inférieure ou égale à 10 m.

3. Installation de préparation de commandes selon l'une des revendications précédentes, **caractérisée en ce que** l'ensemble de l'installation est configuré de telle manière que les marchandises au détail sont déplacées en appliquant une poursuite de but indirecte avec un suivi des marchandises purement informatique.

4. Installation de préparation de commandes selon l'une des revendications précédentes, **caractérisée en ce que** l'installation de préparation des commandes comprend plusieurs modules (156, 157, 158, 159), cependant qu'un module comprend un entrepôt de marchandises au détail (172, 173, 174, 175), un poste de séparation (164, 165, 166, 167) et un poste d'empilage et/ou d'emballage (180, 181, 182, 183).

5. Installation de préparation de commandes selon la revendication 4, **caractérisée en ce que** plusieurs modules (156, 157, 158, 159) avec des postes d'empilage propres (180, 181, 182, 183) présentent un poste d'emballage commun (189).

6. Installation de préparation de commandes selon l'une des revendications précédentes, **caractérisée en ce qu'**un poste de séparation pour séparer les marchandises au détail, qui sont livrées dans une unité d'entrée à partir d'une multitude de mêmes marchandises, en sous-unités à partir de plusieurs marchandises au détail et un entrepôt de sous-unités (30, 40) sont prévus dans lequel des sous-unités par sorte de plusieurs mêmes marchandises au détail sont entreposées.

7. Installation de préparation de commandes pour le reconditionnement entièrement automatique de marchandises au détail provenant d'une unité d'entrée (1) avec une multitude de mêmes marchandises au détail dans une unité de sortie (10) avec une multitude de marchandises au détail différentes, l'installation de préparation de commandes comprenant :
- un poste de séparation pour séparer les marchandises au détail, qui sont livrées dans une unité d'entrée à partir d'une multitude de mêmes marchandises, en marchandises au détail et/ou en sous-unités de plusieurs marchandises au détail,
**caractérisée en ce que** l'installation de préparation des commandes comprend de plus :
- un entrepôt de marchandises au détail dans lequel un emplacement de stockage est prévu pour chaque type de marchandise au détail et qui est configuré comme un entrepôt automatique pour petites pièces avec un transstockeur déplaçable et qui comprend un emplacement de mise en stock des marchandises et un emplacement de prélèvement du stock des marchandises,
- un entrepôt de sous-unités pour stocker plusieurs sous-unités par sorte,
- un poste d'empilage et/ou d'emballage pour regrouper différentes marchandises au détail dans une unité de sortie,
cependant que l'installation est configurée de telle manière que le regroupement de l'unité de sortie peut se faire aussi bien directement avec des sous-unités provenant de l'entrepôt de sous-unités qu'avec des marchandises au détail provenant de l'entrepôt de marchandises au détail.

8. Installation de préparation de commandes selon la revendication 6 ou 7, **caractérisée en ce qu'**il est prévu un troisième chemin de transport qui relie l'entrepôt de sous-unités avec un poste de séparation et/ou l'entrepôt de marchandises au détail et/ou qu'il est prévu un quatrième chemin de transport qui relie l'entrepôt de sous-unités à un poste d'emballage.

9. Procédé pour le reconditionnement entièrement automatique de marchandises au détail provenant d'une unité d'entrée (1) avec une multitude de mêmes marchandises au détail dans une unité de sortie (10) avec une multitude de marchandises au détail différentes, cependant que le procédé utilise une installation de préparation de commandes selon l'une des revendications 1 à 6 et comprend les étapes :
- séparation d'une unité d'entrée livrée à partir d'une multitude de mêmes marchandises en marchandises au détail,
- mise en stock des marchandises au détail dans l'entrepôt de marchandises au détail dans lequel il est prévu un emplacement de stockage pour chaque type de marchandise au détail,
- prélèvement du stock des marchandises au détail de l'entrepôt de marchandises au détail pour former l'unité de sortie en une séquence jusqu'à ce que l'unité de sortie soit terminée,
- regroupement de la séquence de différentes marchandises au détail dans une unité de sortie.

10. Procédé selon la revendication 9, **caractérisé en ce que** la séparation comprend également la séparation en sous-unités à partir de plusieurs marchandises au détail et le regroupement comprend, en plus de la séquence de marchandises au détail provenant de l'entrepôt de marchandises au détail, des sous-unités provenant d'un entrepôt de sous-unités, cependant qu'en particulier le transport des sous-unités se fait de la séparation au regroupement comme transport de sous-unité (transport de pile) en tant que sous-unité fermée.

11. Procédé pour le reconditionnement entièrement automatique de marchandises au détail provenant d'une unité d'entrée (1) avec une multitude de mêmes marchandises au détail (2) dans une unité de sortie (10) avec une multitude de marchandises au détail différentes, cependant que le procédé utilise une installation de préparation de commandes selon l'une des revendications 7 à 8 et comprend les étapes :
- séparation d'une unité d'entrée livrée à partir d'une multitude de mêmes marchandises en marchandises au détail et/ou en sous-unités composées de plusieurs marchandises au détail,
- mise en stock des marchandises au détail dans l'entrepôt de marchandises au détail dans lequel il est prévu un emplacement de stockage pour chaque type de marchandise au détail et/ou mise en stock des sous-unités dans l'entrepôt de sous-unités,
- prélèvement du stock des marchandises au détail et/ou des sous-unités de l'entrepôt de marchandises au détail ou de l'entrepôt des sous-unités pour former l'unité de sortie,
- regroupement de différentes marchandises au détail et/ou sous-unités dans une unité de sortie, cependant que le transport des sous-unités se fait de la séparation au regroupement comme transport de sous-unité (transport de pile) dans l'ensemble de l'unité.

12. Procédé selon l'une des revendications 9 à 11, **caractérisé en ce que** le transport de marchandises au détail partiellement regroupées, en particulier de marchandises au détail différentes empilées, se fait en unités correspondantes, en particulier en unités de pile.

13. Système pour la préparation de commandes par reconditionnement entièrement automatique de marchandises au détail provenant d'une unité d'entrée (1) avec une multitude de mêmes marchandises au détail (2) dans une unité de sortie (10) avec une multitude de marchandises au détail différentes avec une installation de préparation de commandes entièrement automatique selon l'une des revendications 1 à 8, **caractérisé en ce que** les marchandises au détail présentent une surface quelconque sans signe distinctif.
